(19) Europäisches Patentamt
European Patent Office
Office européen des brevets

(11) **EP 4 009 584 A1**

(12) **DEMANDE DE BREVET EUROPEEN**

(43) Date de publication:
**08.06.2022 Bulletin 2022/23**

(21) Numéro de dépôt: **21210411.1**

(22) Date de dépôt: **25.11.2021**

(51) Classification Internationale des Brevets (IPC):
**H04L 9/40** (2022.01)   **G06F 21/55** (2013.01)
**G06N 20/00** (2019.01)   **G06N 3/08** (2006.01)

(52) Classification Coopérative des Brevets (CPC):
**G06F 21/552; G06N 3/088; G06N 20/00;
H04L 63/0263; H04L 63/1416; H04L 63/1425**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **01.12.2020 FR 2012468**

(71) Demandeur: **ORANGE
92130 Issy-les-Moulineaux (FR)**

(72) Inventeurs:
• **SEDJELMACI, Hichem
92326 CHATILLON (FR)**
• **AMOSSE, Maxime
92326 CHATILLON (FR)**

(74) Mandataire: **Cabinet Beau de Loménie
158, rue de l'Université
75340 Paris Cedex 07 (FR)**

(54) **PROCÉDÉ DE DÉTERMINATION DE CLASSIFIEURS POUR LA DÉTECTION D'ATTAQUES DANS UN RÉSEAU DE COMMUNICATION, DISPOSITIF DE DÉTERMINATION ASSOCIÉ**

(57) L'invention concerne un procédé de détermination de classifieurs de paquets réseau, un classifieur étant apte à prédire un comportement d'un paquet parmi au moins un comportement normal et un comportement malveillant, et étant dit « classifieur comportemental ». Ledit procédé comporte des étapes de :
- classification (E70) de paquets d'un premier ensemble par une pluralité de classifieurs comportementaux, de sorte à obtenir un ensemble de comportements respectivement prédits pour les paquets dudit premier ensemble,
- apprentissage supervisé (E80) d'un classifieur comportemental dit « classifieur de génération » à partir dudit ensemble de comportements prédits ainsi que de paramètres de classification respectivement associés aux classifieurs de ladite pluralité de classifieurs comportementaux et déterminés pour ledit premier ensemble,
- apprentissage non supervisé (E90) d'un classifieur comportemental dit « classifieur de discrimination » à partir d'au moins un paquet non étiqueté ainsi que d'un comportement prédit par le classifieur de génération pour ledit au moins un paquet non étiqueté.

[Fig. 3]

**Description**

Technique antérieure

La présente invention appartient au domaine général de la sécurité informatique. Elle concerne plus particulièrement un procédé de détermination de quantités pour la détection d'attaques dans un réseau de communication, lesdites quantités caractérisant des attributs de paquets de données transmis dans ledit réseau de communication et permettant d'établir si ces paquets sont porteurs ou non d'une attaque. Elle concerne également un dispositif de détermination configuré pour mettre en oeuvre un tel procédé. L'invention trouve une application particulièrement avantageuse, bien que nullement limitative, dans le cadre de la surveillance (vis-à-vis d'attaques potentielles) d'un réseau de communication présentant une architecture apte à la mise en oeuvre d'un environnement informatique virtualisé (fonction(s) réseau virtualisée(s), machine(s) virtuelle(s), ressource(s) physique(s) virtualisée(s), etc.).

Une détection rapide et précise d'attaques (exemple : intrusion malveillante), voire de menaces d'attaques, dans un réseau de communication est une problématique critique pour la sécurité des entités partageant un tel réseau de communication. L'ampleur de cette problématique ne cesse en outre de s'accroître de nos jours à mesure que le volume de trafic généré dans les réseaux de communication tend à augmenter.

De manière conventionnelle, la prise en charge de cette problématique est réalisée par des experts en sécurité des réseaux, par exemple regroupés dans une entité dite « SOC » (acronyme de l'expression anglo-saxonne « Security Operating Center ») lorsque la surveillance d'un réseau de communication exploité par une entreprise leur est confiée.

Plus particulièrement, ces experts sont chargés de mettre en oeuvre des outils dédiés de protection, typiquement des systèmes de détection de type IDS (acronyme de l'expression anglo-saxonne « Intrusion Detection System »), conçus pour repérer des activités anormales dans un réseau de communication, et pouvant se décliner selon deux alternatives.

Selon une première alternative, un système IDS repère de manière automatique, grâce à une analyse de paquets de données transmis sur un réseau de communication, un comportement malveillant au sein dudit réseau. Plus particulièrement, ladite analyse s'appuie sur une bibliothèque de signatures propres à une ou plusieurs attaques connues, chaque signature associée à une attaque étant caractérisée par une ou plusieurs règles de détection (par exemple, situation par rapport à un seuil, motif de données inclus dans un paquet, etc.) destinées à être appliquées aux paquets transmis sur le réseau pour détecter cette attaque. Il est donc possible, grâce à un système IDS selon cette première variante, d'établir l'existence d'un comportement malveillant au sein du réseau, mais aussi de connaître plus précisément la nature de l'attaque subie par le réseau (exemple : attaque par déni de service).

Selon une seconde alternative, un système IDS réalise une surveillance d'un réseau sur la base d'un modèle comportemental. Il s'agit ici d'utiliser des techniques relevant du domaine de l'intelligence artificielle, comme typiquement des algorithmes d'apprentissage automatique (encore dit « Machine Learning » dans la littérature anglo-saxonne), pour apprendre à reconnaitre un comportement dit « normal » (par opposition à un comportement malveillant) au sein du réseau. De cette manière, toute divergence par rapport à un comportement normal ainsi appris peut ensuite être signalée au moyen d'une alerte.

Ces première et deuxième alternatives desdits systèmes IDS présentent chacune leurs propres avantages. Ainsi, la première alternative permet de cibler très spécifiquement une quantité limitée d'attaques, générant ainsi un très faible nombre de faux positifs lors de la détection de ces attaques. La seconde alternative, quant à elle, offre la possibilité de découvrir des attaques jusqu'alors inconnues grâce aux techniques d'intelligence artificielle mises en œuvre.

Ces avantages sont néanmoins contrebalancés par un certain nombre d'inconvénients. En effet, les systèmes IDS relevant de la première alternative s'appuient sur des règles de détection statiques, et, in fine, mettent en oeuvre une démarche de surveillance purement réactive similaire à celle d'un anti-virus. Ils sont donc contournables aisément, même par des variantes mineures des règles de détection enregistrées. En conséquence, dans le cadre de cette première alternative, les experts doivent intervenir de manière récurrente pour mettre à jour les règles de détection, conduisant ainsi à une stratégie de protection coûteuse.

En ce qui concerne les systèmes IDS relevant de la deuxième alternative, on comprend qu'ils ne sont pas mis en oeuvre pour reconnaître des attaques spécifiques, mais pour signaler toute activité perçue comme anormale, que cette dernière soit malveillante ou non. Il en résulte une incapacité à connaitre avec précision la nature de l'activité anormale détectée (s'agit-il d'une attaque ? si oui, de quelle attaque s'agit-il ?), et, surtout, un taux de faux positifs particulièrement élevés.

Il convient de noter que les systèmes IDS peuvent éventuellement être combinés à d'autres systèmes de détection, par exemple de type SIEM (acronyme de l'expression anglo-saxonne « Security Information and Event Management ») permettant de collecter, corréler et analyser des alertes émises par lesdits systèmes IDS. Ces systèmes SIEM ne peuvent toutefois pas être considérés comme efficaces en termes de stratégie de protection et de défense. En effet, ils s'appuient, là encore, sur des règles de détection statiques.

Exposé de l'invention

La présente invention a pour objectif de remédier à tout ou partie des inconvénients de l'art antérieur, notamment ceux exposés ci-avant, en proposant une solution qui permette d'obtenir des classifieurs à partir desquels il est possible de détecter des attaques dans un réseau de communication de manière plus efficace que les solutions de l'art antérieur. Par « détection plus efficace », on fait référence ici à une détection d'une grande variété d'attaques, générant peu de faux positifs et en outre peu coûteuse en termes de temps d'expert.

A cet effet, et selon un premier aspect, l'invention concerne un procédé de détermination de classifieurs de paquets de données transmis dans un réseau de communication, un classifieur étant apte à prédire un comportement d'un paquet parmi au moins un comportement normal et un comportement malveillant, et étant dit « classifieur comportemental ». Ledit procédé comporte des étapes de :

- classification de paquets d'un premier ensemble de paquets par une pluralité de classifieurs comportementaux, de sorte à obtenir un ensemble de comportements respectivement prédits pour les paquets dudit premier ensemble,
- apprentissage supervisé d'un classifieur comportemental dit « classifieur de génération » à partir dudit ensemble de comportements prédits ainsi que de paramètres de classification respectivement associés aux classifieurs de ladite pluralité de classifieurs comportementaux et déterminés pour ledit premier ensemble,
- apprentissage non supervisé d'un classifieur comportemental dit « classifieur de discrimination » à partir d'au moins un paquet non étiqueté.

Par « comportement malveillant » d'un paquet, il est fait référence au fait que ledit paquet est utilisé (en tant que tel ou bien en tant qu'élément d'une pluralité de paquets générant un trafic réseau) pour mener une attaque du réseau de communication. On comprend également que la notion de « comportement normal » (pouvant encore être dit « comportement bénin » dans la littérature) se définit a contrario de celle de comportement malveillant.

Ainsi, le procédé de détermination selon l'invention s'appuie sur une pluralité de classifieurs comportementaux pour obtenir un nouveau classifieur, à savoir ledit classifieur de génération. En outre, encore un autre classifieur, à savoir le classifieur de discrimination, est déterminé.

Les classifieurs de ladite pluralité de classifieurs comportemental peuvent dès lors être vus comme « une première couche de classifieurs ». Le procédé de détermination s'appuie dès lors sur une « deuxième couche de classifieurs », au sens où les comportements prédits par la première couche, ainsi que les paquets non étiquetés auxquels ils sont associés, alimentent ledit classifieur de génération et ledit classifieur de discrimination.

Ainsi, le procédé de détermination selon l'invention propose de déterminer des classifieurs destinés à être utilisés pour la détection d'attaques et selon cette topologie en couches (première couche, deuxième couche), ce qui est particulièrement avantageux dans la mesure où ladite topologie permet de générer très peu de faux positifs, comme l'ont constaté les inventeurs (un faux positif correspondant à un paquet prédit comme malveillant alors qu'il est en réalité normal).

Un autre aspect avantageux de l'invention, outre la capacité à générer peu de faux positifs, réside dans le fait que les classifieurs de génération et de discrimination sont déterminés via un apprentissage automatique (supervisé et non supervisé). De cette manière, l'invention tire parti de la capacité de ce type de classifieur à découvrir des attaques jusqu'alors inconnues grâce aux techniques d'intelligence artificielle mises en oeuvre lors de l'apprentissage.

Enfin, il faut également noter que le fait de mettre en oeuvre un apprentissage automatique pour chacun des classifieurs de génération et de discrimination permet ne pas avoir à mettre à jour des règles de détection statiques comme cela est le cas pour certains systèmes IDS. En conséquence, l'invention se révèle être peu coûteuse en termes de temps d'expert.

Il convient de noter que l'invention permet d'envisager différents fonctionnements pour ce qui est des classifieurs de génération et de discrimination. Ainsi, dans un exemple particulier de mise en oeuvre, le fonctionnement du classifieur de génération est indépendant du fonctionnement du classifieur de discrimination. Autrement dit, dans cet exemple particulier, les classifieurs de génération et de discrimination fonctionnent de manière parallèle. Ainsi, aucune information relative à un comportement prédit par l'un desdits classifieurs n'est retournée vers l'autre desdits classifieurs (« feedback » en anglais), un tel retour d'information pouvant par exemple servir à un ajustement des paramètres de classification du classifieur destinataire dudit retour d'information.

Dans un autre exemple particulier de mise en oeuvre, lesdits classifieurs de génération et de discrimination fonctionnent de manière collaborative, à la manière d'un réseau antagoniste génératif GAN (acronyme de l'expression anglo-saxonne « Generative Adversarial Network »). Dans cet exemple plus particulier, le classifieur de discrimination est configuré pour fournir au classifieur de génération un retour d'information sur les différences entre les comportements respectivement prédits par ledit classifieur de discrimination et ledit classifieur de génération.

Dans des modes particuliers de mise en oeuvre, le procédé de détermination peut comporter en outre l'une ou plusieurs des caractéristiques suivantes, prises isolément ou selon toutes les combinaisons techniquement possibles.

Dans des modes particuliers de mise en oeuvre, ladite pluralité de classifieurs comporte un classifieur comportemental configuré pour prédire un comportement d'un paquet parmi au moins un comportement normal et un comportement malveillant à partir d'au moins une règle de détection définissant au moins une signature d'attaque.

Comme mentionnée ci-avant, une signature est typiquement caractérisée par une ou plusieurs règles de détection destinées à être appliquées aux paquets transmis sur le réseau de communication, ces règles de détection étant définies de manière forcée. Par « définies de manière forcée », on fait référence ici au fait que lesdites règles sont définies de manière manuelle, typiquement par un expert réseau, et demeurent statiques. Il peut s'agir de règles de détection conventionnellement intégrées à un pare-feu, ou bien à un logiciel de détection d'intrusion, comme par exemple un logiciel open source tel que Snort, Suricata, etc., ce type de logiciels étant bien connu dans le contexte de la sécurité informatique utilisant un système de détection de type IDS.

Dans des modes particuliers de mise en oeuvre, le procédé comporte des étapes de :

- détermination, pour chaque paquet d'un deuxième ensemble comportant des paquets de comportements respectifs normaux, d'attributs de transition, dits « attributs initiaux », un attribut de transition d'un paquet correspondant à au moins une association d'une séquence de données consécutives dudit paquet avec au moins une donnée dudit paquet consécutive à ladite séquence,
- détermination de quantités, dites « quantités initiales », d'au moins un type donné et respectivement associées auxdits attributs initiaux,
- sélection, parmi lesdits attributs initiaux, d'attributs de transition satisfaisant un critère de sélection défini en fonction desdites quantités initiales,
- apprentissage d'un classifieur comportemental, dit « classifieur de transition », à partir de quantités dudit au moins un type donné et respectivement associées aux attributs initiaux sélectionnés présents dans des paquets d'un troisième ensemble, ledit classifieur de transition appartenant à ladite pluralité de classifieurs comportementaux.

Par exemple, dans des modes particuliers de mise en oeuvre, une donnée d'un paquet correspond à un octet.

Le fait de considérer qu'une donnée correspond à un octet contribue à simplifier la mise en oeuvre du procédé de détermination selon l'invention dans la mesure où il s'agit de l'unité de base conventionnellement adoptée pour le codage d'informations dans le domaine de l'informatique notamment.

Etant extraits de paquets, les attributs de transition sont porteurs d'informations à partir desquelles il est possible d'analyser la nature comportementale (normale ou malveillante) des paquets desquels ils sont issus. Il importe de noter que les dispositions associées à ces modes de mise en oeuvre peuvent être utilisées quel que soit le contexte applicatif lié à la transmission des paquets dans le réseau de communication. En effet, les attributs de transition restent indépendants de telles considérations et s'attachent uniquement à représenter un motif de données (ce motif de données étant composé de ladite séquence et de ladite au moins une donnée consécutive à cette séquence) contenus dans les paquets.

Pour mieux comprendre ces dispositions, on établit ci-après, à titre nullement limitatif, une analogie avec la lecture d'un texte. Dans cette analogie, une phrase du texte correspond à un paquet de données, les données correspondant quant à elle aux mots utilisés pour former des phrases. Par ailleurs, toujours dans le cadre de cette analogie, un attribut de transition peut être vu comme l'association entre une séquence de mots d'une phrase et au moins un mot directement consécutif à cette séquence (tout en appartenant toujours à la phrase considérée). Dès lors, indépendamment du sens que peut avoir une phrase, il est néanmoins possible de juger de la construction de celle-ci (analogie entre une bonne/mauvaise construction de phrase et un caractère normal/bénin d'un paquet) en analysant les attributs de transition qui peuvent en être extraits. En effet, pour un texte rédigé suivant les règles de syntaxe, de grammaire et d'orthographe usuelles, il est attendu de pouvoir trouver des séquences de mots données. A contrario, le fait de trouver des séquences de mots inconnues est un bon indicateur quant au fait que la phrase soit mal construite (exemple : dans le cadre de la langue française, une séquence formée de deux verbes, le mot succédant à cette séquence étant également un verbe).

Ainsi, le fait d'utiliser des attributs de transition permet de prendre en compte dans le processus d'apprentissage supervisé du classifieur de transition la dynamique interne des paquets en termes de succession de données (une donnée correspond par exemple à un octet), sans avoir à tenir compte du cadre applicatif lié à la transmission des paquets dans le réseau de communication. De telles dispositions sont donc particulièrement avantageuses en ce qu'elles renforcent le caractère générique du procédé de détermination, conduisant ainsi à la possibilité de réaliser des détections d'attaques sans biais.

Il convient de noter que plus la taille de la séquences de données consécutives envisagée est grande (et donc, in fine, plus la taille envisagée pour un attribut de transition est grande), plus les attributs de transition susceptibles d'être extraits d'un paquet de données sont porteurs d'une information qualitative vis-à-vis de l'analyse qui peut être faite de la nature comportementale dudit paquet.

Pour illustrer cela, il peut à nouveau être fait référence à l'analogie exposée ci-avant en rapport avec la lecture d'un texte. En effet, plus on envisage des attributs de transition de grande taille, plus il est facile de terminer si une phrase est bien construite ou non. A contrario, si la taille envisagée pour les attributs de transition est petite, l'analyse comportementale d'une phrase est beaucoup plus difficile. Par exemple, si on considère qu'un attribut de transition correspond à l'association entre une séquence composée d'un seul mot et du seul mot consécutif à ladite séquence (il s'agit donc d'un attribut de transition de taille égale à 2, ce qui correspond, dans ce contexte, à une petite taille), on comprend que la probabilité de rencontrer un attribut de transition n'obéissant pas aux règles de syntaxe, de grammaire et d'orthographes usuelles est plus faible que si une taille plus grande était envisagée.

Il ressort de ces considérations qu'il est particulièrement avantageux, en termes de détectabilité d'attaques, que l'information portée par les attributs de transition soit suffisamment pertinente, et que donc la taille considérée pour les attributs de transition soit suffisamment grande. Cela étant, il convient également de prendre en compte deux autres aspects tendant à s'opposer à ce que la taille envisagée pour les attributs de transition soit trop grande, à savoir :

- la complexité spatiale requise (espace mémoire requis pour la mise en oeuvre du procédé de détermination),
- le risque de sur-apprentissage (« overfitting » dans la littérature anglo-saxonne) lors de l'apprentissage supervisé du classifieur de transition.

En définitive, et quand bien même l'invention reste applicable quelle que soit la taille envisagée pour les attributs de transition, il ressort des considérations précédentes qu'il existe un compromis entre, d'une part, des risques liés à des aspects de complexité spatiale et de sur-apprentissage, et d'autre part la qualité de l'information portée par lesdits attributs de transition. En pratique, les inventeurs ont constaté que le fait de considérer des tailles d'attributs de transition comprises entre 2 et 4 octets permettait d'obtenir un excellent compromis.

Par ailleurs, de tels modes de mise en oeuvre s'appuient également sur des quantités d'au moins un type donné pour opérer une sélection parmi lesdits attributs de transition initiaux.

Le fait de mettre en oeuvre une telle sélection permet non seulement de limiter la charge de calcul du dispositif mettant en oeuvre le procédé de détermination, mais offre également la possibilité de choisir des attributs initiaux particulièrement représentatifs d'un comportement normal. De manière plus détaillée, les quantités dudit au moins un type sont des quantités qui caractérisent la présence des attributs de transition dans un paquet de données.

Selon un exemple de mise en oeuvre, des quantités dudit au moins un type donné correspondent à des fréquences d'apparition d'attributs de transition dans un ensemble de paquets de données.

Suivant un autre exemple de mise en oeuvre, ou bien en complément du précédent, des quantités dudit au moins un type donné correspondent à des gains d'information respectivement associés à des attributs de transition dans un ensemble de paquets de données.

Il est à noter qu'outre les avantages déjà mentionnés ci-avant, le fait de considérer des quantités initiales ainsi que d'opérer une sélection basée sur celles-ci offre la possibilité, lorsque la taille envisagée pour les attributs de transition est relativement élevée (par exemple une taille plus grande que 5), de limiter les risques d'être confronté à une complexité spatiale importante ainsi qu'à un sur-apprentissage.

En résumé, il est proposé, dans de tels modes de mise en oeuvre, d'exploiter des attributs (ici les attributs de transition) déterminés de façon automatisée (par opposition à des attributs définis par des experts). Toutefois, les attributs de transition exploités sont dûment sélectionnés parmi tous les attributs initiaux, de sorte à former une partie représentative et pertinente. De cette sorte, on économise les ressources nécessaires pour traiter les attributs de transition et on limite le bruit associé à des attributs de transition qui ne sont pas pertinents et n'apportent pas d'informations ou des informations inutiles voire bruitées.

Dans des modes particuliers de mise en oeuvre, le critère de sélection est satisfait pour un attribut initial si la quantité initiale associée audit attribut initial est supérieure à un seuil.

Dans des modes particuliers de mise en oeuvre un attribut de transition sélectionné au cours de l'étape de sélection correspond soit à une seule association, soit à un groupe formé des séquences de données consécutives pouvant être obtenues à partir d'une pluralité déterminée d'associations.

Le fait de réunir des attributs initiaux dans des groupes suivant de telles dispositions permet avantageusement de réduire le nombre d'attributs de transition sélectionnés, ce qui permet dès lors de faciliter la mise en oeuvre des étapes faisant suite à l'étape de sélection. Qui plus est, les inventeurs ont constaté que la mise en oeuvre de tels regroupements d'attributs initiaux permet d'améliorer la robustesse et la précision de l'apprentissage du classifieur de transition.

Cet exemple n'est toutefois pas limitatif, et on pourrait envisager d'autres façons de constituer des groupes

Dans des modes particuliers de mise en oeuvre, ledit procédé comporte une étape si un critère de mise à jour est satisfait, une étape de mise à jour de :

- au moins un desdits attributs de transition sélectionnés lorsqu'un apprentissage du classifieur de transition est réalisé, et/ou
- au moins un attribut, dit « attribut comportemental », représentatif d'un trafic réseau et/ou au moins une signature d'attaque utilisé(e) par au moins un classifieur comportemental appartenant à ladite pluralité de classifieurs comportementaux.

Le critère de mise à jour est satisfait par exemple si, pour au moins un paquet non étiqueté, le comportement prédit par le classifieur de transition diffère du comportement prédit par au moins un autre classifieur comportemental. De telles dispositions sont simples à mettre en œuvre, car elles consistent à directement comparer entre eux les différents comportements prédits par les classifieurs de ladite pluralité de classifieurs comportementaux.

Alternativement, ledit critère de mise à jour est satisfait en fonction par exemple d'un résultat de comparaison entre des comportements respectivement prédits par les classifieurs de génération et de discrimination pour au moins un paquet non étiqueté.

Ainsi, suivant de telles dispositions, le procédé propose, sous condition, de mettre à jour tout ou partie des éléments exploités par les différents classifieurs envisagés dans l'invention, à savoir notamment tout ou partie des attributs de transition sélectionnés lors de l'étape de sélection et/ou tout ou partie des attributs comportementaux utilisés pour définir des règles de détection et/ou tout ou partie des signatures . Procéder de la sorte offre la possibilité de renouveler tout ou partie des éléments précités, et donc en particulier d'utiliser des attributs et/ou signatures qui soient davantage pertinents pour construire un ou plusieurs classifieurs comportementaux efficients.

On note également que la mise à jour des éléments précités peut s'effectuer en tenant compte de l'avis d'experts en sécurité informatique et/ou de résultats d'analyse fournis par des systèmes IDS conventionnels et/ou d'une analyse fournie par une entité de confiance. Cela vaut notamment, le cas échéant, lorsque les comportements respectivement prédits par les classifieurs de génération et de discrimination diffèrent entre eux, mais peut aussi s'appliquer lorsque ces comportements sont identiques (par exemple si un expert décide de procéder à une vérification pour s'assurer que les classifieurs de génération et de discrimination ont un fonctionnement adapté).

De cette manière, il est possible d'accroître la robustesse et la fiabilité de prédiction de comportement des classifieurs comportementaux, et donc, in fine, de réduire le taux de faux positifs généré par ces classifieurs. En effet, une fois qu'une mise à jour a été effectuée, il est possible de réentraîner les classifieurs appris de manière automatique, de sorte que ces derniers tiennent compte de l'information pertinente induite par cette mise à jour.

D'une manière générale, le fait de réaliser une mise à jour relève de la volonté d'obtenir, pour un paquet, un ensemble de comportements cohérents entre les différents classifieurs utilisés par le procédé de détermination selon l'invention, de sorte à maximiser la confiance en l'étiquette comportementale destinée à être finalement attribuée à un paquet non étiqueté. Dit autrement, il s'agit de réduire le nombre de faux positifs susceptibles d'être générés par les classifieurs utilisés.

Dans des modes particuliers de mise en œuvre, suite à une mise en œuvre de l'étape de mise à jour, le ré-apprentissage d'au moins un classifieur parmi ladite pluralité de classifieurs, le classifieur de génération et le classifieur de discrimination est déclenché.

Le fait d'envisager un tel ré-apprentissage permet d'améliorer encore plus la qualité de prédiction des étiquettes pouvant être attribuées auxdits paquets.

Dans des modes particuliers de mise en œuvre, lorsque l'étape de mise à jour concerne au moins un attribut de transition, le fait que le critère de mise à jour soit satisfait déclenche :

- une mise à jour des quantités initiales en fonction de paquets transmis dans le réseau de communication depuis la dernière détermination desdites quantités initiales, et/ou
- une mise à jour du critère de sélection,

la mise à jour dudit au moins un attribut de transition sélectionné étant effectuée en fonction du ou des mises à jour déclenchées.

Dans des modes particuliers de mise en œuvre, l'apprentissage supervisé d'un classifieur comportemental met en œuvre l'un quelconque des algorithmes parmi :

- un algorithme naïf bayésien,
- un algorithme d'arbres décisionnels,
- un algorithme de machine à vecteurs de support,
- un algorithme de classification basé sur un réseau de neurones,
- un algorithme de k plus proches voisins.

Dans des modes particuliers de mise en œuvre, lorsqu'un classifieur comportemental est appris de manière supervisée, l'ensemble de paquets à partir duquel est appris ledit classifieur comportemental comporte au moins un paquet normal et au moins un paquet malveillant.

Selon un deuxième aspect, l'invention concerne un procédé de détection d'attaques dans un réseau de communication. Ledit procédé comporte des étapes de :

- obtention d'un classifieur de génération et d'un classifieur de discrimination déterminés selon un procédé de détermination conforme à l'invention, ainsi que d'une pluralité de classifieurs comportementaux utilisés pour apprendre de manière supervisée le classifieur de génération,
- détection d'attaques dans le réseau de communication au moyen du classifieur de génération, du classifieur de discrimination ainsi que de ladite pluralité de classifieurs comportementaux.

Dans des modes particuliers de mise en œuvre, une décision quant à la présence ou non d'une attaque est émise par le classifieur de discrimination à partir d'au moins un comportement prédit par ledit classifieur de discrimination pour au moins un paquet non étiqueté.

Dans des modes particuliers de mise en oeuvre, ladite étape de détection d'attaques comporte des sous-étapes de :

- classification d'au moins un paquet non étiqueté par les classifieurs de ladite pluralité de classifieurs comportementaux,
- classification dudit au moins un paquet non étiqueté par le classifieur de génération, à partir des comportements prédits pour ledit au moins un paquet non étiqueté par les classifieurs de ladite pluralité de classifieurs comportementaux,
- classification dudit au moins un paquet non étiqueté par le classifieur de discrimination à partir du comportement prédit pour ledit au moins un paquet non étiqueté par ledit classifieur de génération.

Dans des modes particuliers de mise en oeuvre, ledit procédé comporte en outre une étape de comparaison entre des comportements prédits pour au moins un paquet non étiqueté par respectivement le classifieur de génération et le classifieur de discrimination, et, si lesdits comportements prédits diffèrent entre eux, une étape de mise à jour d'au moins un attributs de transition et/ou un attribut, dit « attribut comportemental », représentatif d'un trafic réseau et/ou une signature d'attaque utilisé(e) par au moins un classifieur comportemental appartenant à ladite pluralité de classifieurs comportementaux.

Selon un troisième aspect, l'invention concerne un programme d'ordinateur comportant des instructions pour la mise en oeuvre d'un procédé de détermination selon l'invention ou d'un procédé de détection selon l'invention lorsque ledit programme d'ordinateur est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un quatrième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un cinquième aspect, l'invention concerne un dispositif de détermination de classifieurs de paquets de données transmis dans un réseau de communication, un classifieur étant apte à prédire un comportement d'un paquet parmi au moins un comportement normal et un comportement malveillant, et étant dit « classifieur comportemental ». Ledit dispositif comporte :

- un module de classification configuré pour classifier des paquets d'un premier ensemble de paquets par une pluralité de classifieurs comportementaux, de sorte à obtenir un ensemble de comportements respectivement prédits pour les paquets dudit premier ensemble,
- un premier module d'apprentissage configuré pour apprendre de manière supervisée un classifieur comportemental dit « classifieur de génération » à partir dudit ensemble de comportements prédits ainsi que de paramètres de classification respectivement associés aux classifieurs de ladite pluralité de classifieurs comportementaux et déterminés pour ledit premier ensemble,
- un deuxième module d'apprentissage configuré pour apprendre de manière non supervisée un classifieur comportemental dit « classifieur de discrimination » à partir d'au moins un paquet non étiqueté ainsi que d'un comportement prédit par le classifieur de génération pour ledit au moins un paquet non étiqueté.

Selon un sixième aspect, l'invention concerne un dispositif de détection d'attaques dans un réseau de communication. Ledit dispositif de détection comporte :

- un module d'obtention configuré pour obtenir un classifieur de génération et un classifieur de discrimination déterminés par un dispositif de détermination selon l'invention, ainsi qu'une pluralité de classifieurs comportementaux utilisés par ledit dispositif de détermination pour apprendre de manière supervisée le classifieur de génération,
- un module de détection configuré pour détecter des attaques dans le réseau de communication au moyen du classifieur de génération, du classifieur de discrimination ainsi que de ladite pluralité de classifieurs comportementaux.

Selon un septième aspect, l'invention concerne un système de détection d'attaques dans un réseau de communication, ledit système comportant un dispositif de détermination selon l'invention ainsi qu'un dispositif de détection d'attaques selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente schématiquement, dans son environnement, un mode particulier de réalisation d'un système de détection d'attaques dans un réseau de communication selon l'invention ;

[Fig. 2] la figure 2 représente schématiquement un exemple d'architecture matérielle d'un dispositif de détermination selon l'invention appartenant au système de détection de la figure 1 ;

[Fig. 3] la figure 3 représente, sous forme d'ordinogramme, un mode particulier de mise en oeuvre d'un procédé de détermination selon l'invention, par le dispositif de détermination de la figure 2 ;

[Fig. 4] la figure 4 représente schématiquement un exemple d'architecture matérielle d'un dispositif de détection selon l'invention appartenant au système informatique 10 de la figure 1.

[Fig. 5] la figure 5 représente, sous forme d'ordinogramme, un mode particulier de mise en oeuvre d'un procédé de détection d'attaques selon l'invention, par le dispositif de détection de la figure 4,

[Fig. 6] la figure 6 représente, sous forme d'ordinogramme, un autre mode particulier de mise en oeuvre du procédé de détermination selon l'invention.

Description des modes de réalisation

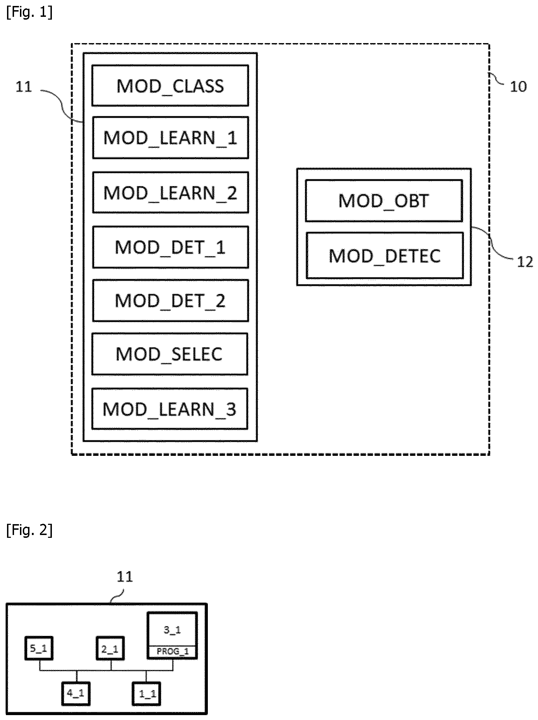

La figure 1 représente schématiquement, dans son environnement, un mode particulier de réalisation d'un système 10 de détection d'attaques dans un réseau de communication selon l'invention.

Dans la présente description, les attaques considérées sont des attaques de type informatique. De manière connue, la notion d'attaque informatique regroupe tout comportement visant à nuire (i.e. comportement malveillant) à une ou plusieurs entités (machines) déployées dans le réseau de communication, par exemple pour cibler un utilisateur d'une entité déterminée, voire au réseau de communication lui-même pour en altérer le fonctionnement.

Aussi, dans le cadre de la présente invention, aucune limitation n'est attachée aux attaques pouvant être envisagées. Par exemple, il peut s'agir d'attaques appartenant à l'une quelconque des deux catégories suivantes : attaques opportunistes ne ciblant aucune entité du réseau en particulier, mais dont le but est d'attaquer ledit réseau dans sa globalité afin d'atteindre le plus grand nombre possible d'entités ; attaques ciblées visant une ou plusieurs entités en particulier. Au sein même desdites deux catégories, il peut s'agir, de manière plus spécifique : d'une attaque par virus (infection) ; d'un contournement malveillant de moyens de sécurité comme par exemple un pare-feu (« firewall » dans la littérature anglo-saxonne), auquel cas il est fait référence à une « intrusion malveillante » ; d'une attaque par déni de service DoS (acronyme de l'expression anglo-saxonne « Denial of Service Attack ») ; etc.

Le réseau de communication (non illustré sur la figure 1) pour lequel une surveillance est recherchée (i.e. le réseau de communication pour lequel on cherche à déterminer s'il a été ou va être l'objet d'une attaque), peut correspondre à un réseau mobile (2G, 3G, 4G, 5G), LAN (Local Area Network), WAN (Wide Area Network), WLAN (Wireless LAN), Internet, etc. De manière générale, aucune limitation n'est attachée à la nature dudit réseau de communication.

L'architecture dudit réseau de communication ne représente également pas un facteur limitant de l'invention. A titre d'exemple nullement limitatif, le réseau de communication présente une architecture apte à la mise en œuvre d'un environnement informatique virtualisé (fonction(s) réseau virtualisée(s), machine(s) virtuelle(s), ressource(s) physique(s) virtualisée(s), etc.). Par exemple, ladite architecture réseau peut être une architecture MEC, SDN ou NFV (acronymes respectifs des expressions anglo-saxonnes « Mobile Edge Computing », « Software Defined Network, « Network functions virtualization »).

L'utilisation de l'invention dans le cadre d'un environnement virtualisé est particulièrement avantageuse dans la mesure où la protection (vis-à-vis d'attaques) d'un réseau déployé dans ce type d'environnement est généralement complexe à assurer. Cette complexité résulte de différents facteurs, et en particulier du fait qu'un ou plusieurs systèmes d'exploitation s'exécutent comme des machines virtuelles multipliant ainsi le nombre de points d'entrée potentiels dans le réseau de communication.

De manière conventionnelle, et tel qu'évoqué ci-avant, ledit réseau de communication peut comporter une pluralité d'entités, comme par exemple un ou plusieurs serveurs, un ou plusieurs postes clients, etc. (non illustrés sur la figure 1), aptes à communiquer entre eux. Aucune limitation n'est attachée à la nature, ni même au nombre, des entités appartenant au réseau de communication et pouvant communiquer entre elles.

La communication entre les différentes entités appartenant au réseau de communication s'effectue via la transmission de paquets de données. Chaque paquet de données (encore connu sous la dénomination de « paquet réseau ») est donc configuré pour être transmis dans ledit réseau de communication, et représente à cet effet l'unité de transmission de la couche réseau associée à l'architecture sur laquelle s'appuie le réseau de communication.

De manière conventionnelle, la transmission des paquets dans le réseau s'effectue conformément à un protocole donné. Par exemple, ledit protocole correspond au protocole DIAMETER ou bien au protocole GTP (acronyme de l'expression anglo-saxonne « GPRS Tunneling Protocol »). Il convient toutefois de noter que le fait de considérer les protocoles DIAMETER ou GTP ne constitue qu'une variante d'implémentation de l'invention, tout protocole de communication étant en définitive envisageable dès lors qu'il implique une communication sous forme de paquets de données entre entités du réseau.

D'une manière générale, les aspects liés à la nature et à l'architecture du réseau de communication, à la configuration d'un paquet de données ainsi qu'au protocole de communication utilisé sont bien connus de l'homme du métier, et ne sont par conséquent pas décrits plus en détails ici.

Dans le présent mode de réalisation, chaque paquet correspond à une séquence d'octets (ou « bytes », un octet étant constitué de façon connue en soi de 8 bits). Ces octets représentent des données au sens de l'invention et définissent, par exemple, un entête (« header » en anglais) comprenant les informations nécessaires à l'acheminement de chaque paquet vers une entité déterminée du réseau de communication, ainsi qu'un message destiné à ladite entité.

Il est à noter que le fait de considérer qu'une donnée d'un paquet correspond à un octet ne constitue qu'une variante d'implémentation de l'invention. Rien n'exclut en effet d'envisager qu'une donnée diffère d'un octet et corresponde par exemple à un bit, deux bits, plusieurs octets, etc.

Par ailleurs, dans le présent mode de réalisation, chaque paquet de données peut se voir attribuer une étiquette parmi deux étiquettes comportementales possibles. Autrement dit, le fait « d'attribuer une étiquette » à un paquet fait référence ici à une opération de classification du comportement dudit paquet.

Plus particulièrement, une étiquette d'un paquet qualifie un comportement soit malveillant, soit normal dudit paquet. On comprend bien entendu que par « comportement malveillant », il est fait référence au fait que ledit paquet est utilisé (en tant que tel ou bien en tant qu'élément d'une pluralité de paquets générant un trafic réseau) pour mener une attaque du réseau de communication. On comprend également que la notion de « comportement normal » se définit a contrario de celle de comportement malveillant.

Pour la suite de la description, on utilise de manière équivalente les expressions « paquet de comportement malveillant » (respectivement « paquet de comportement normal ») et « paquet malveillant » (respectivement « paquet normal »).

L'invention ne se limite néanmoins pas aux dispositions selon lesquelles seules deux étiquettes (normal ou malveillant) peuvent être attribuées à un paquet de données. De manière générale, aucune limitation n'est attachée au nombre de comportements pouvant être envisagés dans le cadre de l'invention, l'homme du métier étant en mesure d'adapter la description qui suit et qui se focalise sur les seuls deux comportements (normal et malveillant) précités.

Outre le fait qu'il est possible d'associer des étiquettes comportementales à des paquets de données transmis dans le réseau, il est également possible d'associer un ou plusieurs attributs à un ou plusieurs paquets. Ces attributs peuvent notamment appartenir à l'une des catégories suivantes :

- un attribut, dit « attribut de transition », représentatif de la dynamique interne d'un paquet en termes de succession de données dudit paquet. Cette catégorie est décrite en détails ultérieurement ;
- un attribut, dit « attribut comportemental », formant un indicateur du trafic réseau. A titre d'exemple, un attribut comportemental peut correspondre à : un taux d'erreurs de transmission (proportion de paquets altérés parmi les paquets transmis dans le réseau), un taux d'échecs de transmission, un nombre de retransmissions de paquets, un nombre de paquets supprimés, un nombre de paquets émis, une durée de communication dans le réseau de communication, un « drapeau » (« flag » dans la littérature anglo-saxonne) correspondant à un ensemble de bits fournissant une information contextuelle propre audit paquet (par exemple un drapeau indiquant si un fichier auquel appartient un paquet de données est en lecture seule, ou bien par exemple encore si un paquet contient ou non une information utile aux décodages des données dudit paquet par un utilisateur), etc. ;
- un attribut, dit « attribut d'identification », représentatif d'une donnée d'identification d'un paquet. A titre d'exemple, un attribut d'identification peut correspondre à un identifiant d'utilisateur de type IMSI (acronyme de l'expression anglo-saxonne « International Mobile Subscriber Identity ») encapsulé dans un paquet, un identifiant d'un pays, un identifiant d'un opérateur, un identifiant d'antenne, un identifiant de connexion, un identifiant de ressources accédées, etc.

On note que les attributs comportementaux, et/ou les attributs d'identification, peuvent classiquement être utilisés pour déterminer des règles de détection destinées à modéliser des attaques connues sous forme de signatures. On note par ailleurs que l'obtention d'un attribut comportemental ou bien d'un attribut d'identification peut par exemple s'effectuer par extraction à l'aide de logiciels dédiés et connus de l'homme du métier, comme par exemple Ngrep, TCPflow, Wireshark, TShark, etc.

Dans le mode de réalisation illustré par la figure 1, le système de détection 10 comporte un dispositif de détermination 11 configuré pour réaliser des traitements permettant de déterminer des classifieurs destinés à être utilisés pour la détection d'attaques dans ledit réseau de communication, en mettant en œuvre un procédé de détermination selon l'invention. Des modes de de mise en œuvre de ce procédé de détermination sont décrits plus en détails ultérieurement.

Ledit système de détection 10 comporte également un dispositif de détection d'attaques 12, distinct dudit dispositif de détermination 11, configuré pour réaliser des traitements permettant de détecter des attaques dans le réseau de communication à partir des classifieurs déterminés par le dispositif de détermination 11, en mettant en œuvre un procédé de détection selon l'invention. Des modes de mise en œuvre dudit procédé de détection sont également décrits plus en détails ultérieurement.

Par « classifieur », on fait référence ici à un modèle de classification automatique apte à prédire un comportement bénin ou malveillant d'un paquet, autrement dit à attribuer une étiquette comportementale à un paquet non étiqueté. D'un point de vue terminologique, un tel classifieur est qualifié de « comportemental » dans la suite de la description.

Dans le mode de réalisation décrit ici, et illustré par la figure 1, lesdits dispositifs de détermination 11 et de détection 12 appartiennent audit réseau de communication sur lequel ils peuvent s'appuyer pour communiquer entre eux, mais également avec les autres entités partageant ledit réseau.

Rien n'exclut toutefois d'envisager d'autres modes de réalisation dans lesquels, par exemple, lesdits dispositifs de détermination 11 et de détection 12 appartiennent à un autre réseau de communication, ou bien encore dans lesquels chacun de ces dispositifs 11, 12 appartient à un réseau de communication qui lui est propre et distinct du réseau de communication destiné à être surveillé. Dans ce cas, les réseaux de communication en question sont raccordés entre eux de manière connue en soi pour permettre aux dispositifs de détermination 11 et de détection 12 de communiquer entre eux ainsi qu'avec les entités du réseau de communication destiné à être surveillé.

D'une manière générale, aucune limitation n'est attachée à l'emplacement réseau des dispositifs de détermination 11 et de détection 12 dès lors que ces derniers peuvent obtenir des paquets de données transmis et interceptés (par exemple au moyen d'une sonde réseau de type connu en soi) sur le réseau de communication destiné à être surveillé, pour mettre en œuvre les procédés de détermination et de détection mentionnés ci-avant.

La figure 2 représente schématiquement un exemple d'architecture matérielle du dispositif de détermination 11 selon l'invention appartenant au système informatique 10 de la figure 1.

Tel qu'illustré par la figure 2, le dispositif de détermination 11 dispose de l'architecture matérielle d'un ordinateur. Ainsi, le dispositif de détermination 11 comporte, notamment, un processeur 1_1, une mémoire vive 2_1, une mémoire morte 3_1 et une mémoire non volatile 4_1. Il comporte en outre un module de communication 5_1.

La mémoire morte 3_1 du dispositif de détermination 11 constitue un support d'enregistrement conforme à l'invention, lisible par le processeur 1_1 et sur lequel est enregistré un programme d'ordinateur PROG_1 conforme à l'invention, comportant des instructions pour l'exécution d'étapes du procédé de détermination selon l'invention. Le programme PROG_1 définit des modules fonctionnels du dispositif de détermination 11, qui s'appuient ou commandent les éléments matériels 1_1 à 5_1 du dispositif de détermination 11 cités précédemment, et qui comprennent notamment :

- un module de classification MOD_CLASS configuré pour classifier des paquets d'un premier ensemble de paquets par une pluralité de classifieurs comportementaux, de sorte à obtenir un ensemble de comportements respectivement prédits pour les paquets dudit premier ensemble,
- un premier module d'apprentissage MOD_LEARN_1 configuré pour apprendre de manière supervisée un classifieur comportemental dit « classifieur de génération » à partir dudit ensemble de comportements prédits ainsi que de paramètres de classification respectivement associés aux classifieurs de ladite pluralité de classifieurs comportementaux et déterminés pour ledit premier ensemble,
- un deuxième module d'apprentissage MOD_LEARN_2 configuré pour apprendre de manière non supervisée un classifieur comportemental dit « classifieur de discrimination » à partir d'au moins un paquet non étiqueté.

Le module de communication 5_1 permet notamment au dispositif de détermination 11 de communiquer, via le réseau de communication, avec le dispositif de détection 12, pour lui transmettre des classifieurs qu'il a déterminés (la transmission d'un classifieur correspondant ici à la transmission d'un module logiciel représentatif d'un classifieur). Pour ce faire, le module de communication 5_1 comporte une interface de communication, filaire ou non filaire, apte à mettre en œuvre tout protocole supporté par le réseau de communication. De cette manière, une fois en possession desdits classifieurs, le dispositif de détection 12 est en mesure de détecter des attaques dans le réseau de communication en mettant en œuvre le procédé de détection selon l'invention.

Il convient de noter que le dispositif de détermination 11 peut encore comporter d'autres modules, notamment pour mettre en œuvre des modes particuliers du procédé de détermination et comme cela est décrit plus en détail ultérieurement.

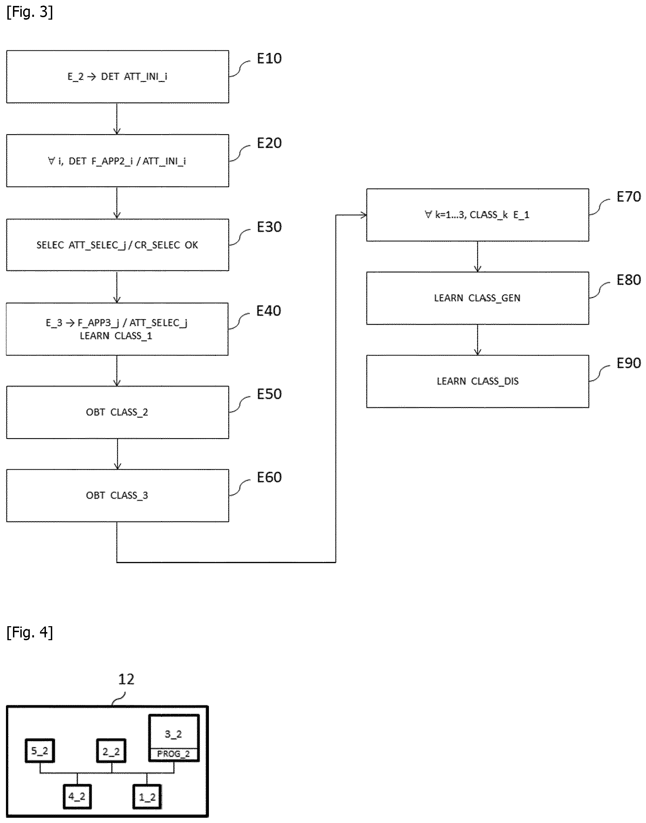

La figure 3 représente, sous forme d'ordinogramme, un mode particulier de mise en œuvre du procédé de détermination selon l'invention par le dispositif de détermination 11 de la figure 2.

Tel qu'illustré par la figure 3, le procédé de détermination comporte une étape E70 de classification de paquets d'un premier ensemble E_1 de paquets par une pluralité de classifieurs comportementaux, de sorte à obtenir un ensemble de comportements respectivement prédits pour les paquets dudit premier ensemble E_1. Ladite étape E70 est mise en œuvre par le premier module de classification MOD_CLASS équipant le dispositif de détermination 11.

Ledit premier ensemble E_1 peut être obtenu par le dispositif de détermination 11 de différentes manières. Par exemple, le procédé de détermination comporte une étape préalable (i.e. mise en œuvre avant l'étape E70) d'interception de paquets de données dans le réseau de communication, typiquement au moyen d'une sonde réseau de type connu en soi équipant le dispositif de détermination 11. Autrement dit, dans cet exemple, le terme « obtention » fait référence à l'interception des paquets de l'ensemble E_1 directement par le dispositif de détermination 11, au cours d'une étape faisant partie intégrante du procédé de détermination.

Selon un autre exemple, une étape d'interception de paquets dans le réseau de communication est mise en œuvre par un autre dispositif, distinct dudit dispositif de détermination 11. Puis, ledit premier ensemble E_1 est transmis dudit autre dispositif vers le dispositif de détermination 11, cette transmission étant mise en œuvre par le module de communication 5_1 équipant ledit dispositif de détermination 11.

En tout état de cause, quelle que soit la manière dont est obtenu ledit premier ensemble E_1, il convient de noter que l'emplacement au sein du réseau en lequel les paquets sont interceptés ne constitue pas un facteur limitant de l'invention, tout comme la durée pendant laquelle l'interception des paquets a lieu.

On note par ailleurs que, dans la mesure où les paquets formant l'ensemble E_1 sont destinés à être classifiés, il s'agit donc bien entendu de paquets non étiquetés dont on ne connait pas a priori le comportement. Il peut donc d'agir de paquets normaux et/ou de paquets malveillants.

L'étape E70 s'appuie donc sur une pluralité de classifieurs comportementaux pour classifier les paquets de l'ensemble E_1. Ces classifieurs comportementaux peuvent être de natures variées.

Dans le présent mode de mise en œuvre, ladite pluralité de classifieurs comportementaux comporte notamment un classifieur configuré pour prédire le comportement normal ou malveillant d'un paquet à partir d'au moins une règle de détection définissant au moins une signature d'attaque.

Plus particulièrement, et selon un premier exemple, ladite pluralité de classifieurs comportementaux comporte un classifieur configuré pour prédire le comportement normal ou malveillant d'un paquet à partir d'au moins une signature d'attaque prédéterminée. Aucune limitation n'est attachée au nombre de signatures prédéterminées pouvant être envisagé dans ce premier exemple de mise en oeuvre. On note par ailleurs qu'un tel classifieur est similaire à un classifieur mis en œuvre par un système IDS relevant de la première alternative décrite auparavant (exemple : pare-feu ; logiciel de détection d'intrusion comme par exemple un logiciel open source tel que Snort, Suricata, etc.).

Le ou les signatures considérées dans ledit premier exemple de mise en œuvre sont construites, de manière connue en soi, au moyen de règles de détection statiques répertoriées (et ajoutées de manière récurrente) dans des bases de données par des experts réseau. Lesdites règles de détection peuvent présenter des natures diverses (atomique, composite) en fonction des attaques auxquelles elles se rapportent. Comme cela a déjà été mentionné auparavant, une règle de détection d'une signature peut être construite à partir de critères portant sur un ou plusieurs attributs comportementaux, et/ou sur un ou plusieurs attributs d'identification.

Selon un deuxième exemple de mise en oeuvre, combinable avec le premier exemple dans lequel un classifieur comportemental basé sur au moins une signature prédéterminée est utilisé, ladite pluralité de classifieurs comportementaux comporte un classifieur appris de manière automatique (supervisée ou non supervisée) à partir d'une ou plusieurs règles de détection appliquées à des paquets d'un ensemble E_BIS. Ainsi, à la différence du premier exemple précédent, il s'agit ici de choisir une ou plusieurs règles de détection, par exemple parmi des règles de détection définissant une ou plusieurs signatures d'attaque, puis de réaliser un entrainement automatique sur la base des règles de détection ainsi choisies.

Dans ce deuxième exemple, ledit ensemble E_BIS forme un ensemble d'entraînement du classifieur comportemental appris à partir de ladite ou desdites règles de détection. Ledit ensemble E_BIS est par exemple égal, en tout ou partie, au premier ensemble E_1, ou bien encore, de manière alternative, strictement distinct du premier ensemble E_1. En tout état de cause, pour garantir une meilleure fiabilité de prédiction, ledit ensemble E_BIS comporte avantageusement, dans le cas d'un apprentissage supervisé, au moins un paquet normal et au moins un paquet malveillant.

Ledit au moins un paquet malveillant est par exemple obtenu grâce à une méthode de génération par mutations aléatoires (« mutation-based fuzzing » dans la littérature anglo-saxonne). Une telle méthode regroupe plusieurs techniques (inversement d'un bit, substitution et/ou insertion aléatoire d'un ou plusieurs octets, effacement d'un octet, etc.) et est bien connue de l'homme du métier, de sorte qu'elle n'est pas décrite davantage ici.

Le choix d'une méthode de génération par mutations aléatoires pour obtenir au moins un paquet malveillant de l'ensemble E_BIS ne constitue qu'une variante d'implémentation de l'invention. D'autres variantes peuvent être envisagées, comme par exemple insérer volontairement dans l'ensemble E_BIS des paquets de données déjà préalablement identifiés comme appartenant à une attaque (une telle identification préalable pouvant par exemple être mise en œuvre manuellement par un expert en sécurité numérique).

En outre, quelle que soit la méthode utilisée pour générer au moins un paquet malveillant, cette méthode peut être directement appliquée, si cela est techniquement possible, à un ou plusieurs paquets normaux dudit ensemble E_BIS ou bien encore à des paquets normaux n'appartenant pas audit ensemble E_BIS. D'ailleurs, rien n'exclut non plus d'envisager qu'un ou plusieurs paquets malveillants aient été préalablement générés puis mémorisés dans une base de données dédiée pour ensuite être transmis vers le dispositif de détermination 11.

En définitive, aucune limitation n'est attachée à la manière dont ledit au moins un paquet normal et ledit au moins un paquet malveillant sont obtenus pour former l'ensemble E_BIS.

Comme mentionné auparavant, lorsque ladite pluralité de classifieurs comportementaux comporte un classifieur appris de manière automatique, cet apprentissage peut être réalisé de manière supervisée. De manière connue en soi, l'apprentissage supervisé d'un classifieur revient à apprendre une fonction G configurée pour attribuer une étiquette comportementale (normal ou malveillant) à un paquet non étiqueté. Plus précisément, une telle fonction G est configurée pour fournir des probabilités qu'un paquet non étiqueté fourni en entrée de ladite fonction G soit respectivement normal ou malveillant, la décision quant au comportement de ce paquet (et donc in fine l'étiquette qu'il convient de lui attribuer) étant finalement prise sur la base de ces probabilités.

L'apprentissage d'une telle fonction G s'appuie classiquement sur un vecteur dit « vecteur de caractéristiques » représentant les paramètres d'apprentissage du modèle de classification et destinés à être pondérés par des coefficients propres à chaque paquet fourni en entrée de ladite fonction G.

A titre illustratif, dans le deuxième exemple de mise en œuvre considéré auparavant, le vecteur de caractéristiques est construit à partir d'attributs utilisés pour définir ladite ou lesdites règles de détection prises en compte. Il peut s'agir par exemple d'attributs comportementaux et/ou d'attributs d'identification.

En pratique, l'apprentissage supervisé d'un classifieur comportemental s'effectue au moyen d'un algorithme d'apprentissage supervisé. Aucune limitation n'est attachée à l'algorithme d'apprentissage supervisé pouvant être envisagé dans le cadre de la présente invention (et donc en particulier dans le cadre du deuxième exemple de mise en oeuvre considéré aupravant). Par exemple, il peut s'agir de l'un quelconque des algorithmes parmi :

- un algorithme d'arbres décisionnels,
- un algorithme naïf bayésien,
- un algorithme de machine à vecteurs de support,
- un algorithme de classification basé sur un réseau de neurones,
- un algorithme de k plus proches voisins.

Il convient de noter que l'obtention de chaque classifieur décrit ci-avant en référence aux premier et deuxième exemples de mise en œuvre (classifieur basé sur un ensemble de règle de détection, classifieur appris de manière supervisée à partir d'attributs annexes) peut faire l'objet d'une étape de détermination propre à ce classifieur et intégrée au procédé de détermination. Autrement dit, un classifieur faisant l'objet d'un desdits premier et deuxième exemples peut être déterminé lors de l'exécution du procédé de détermination.

Alternativement, un classifieur faisant l'objet d'un desdits premier et deuxième exemples peut être déterminé lors d'une étape préalable au procédé de détermination, de sorte qu'une fois ledit classifieur déterminé, celui-ci est transmis au dispositif de détermination 11 qui peut l'utiliser dans le cadre de la mise en œuvre de l'étape E70 de classification.

Il convient également de noter qu'aucune limitation n'est attachée au nombre de classifieurs comportementaux appris de manière supervisée pouvant être envisagé dans le cadre du deuxième exemple de mise en oeuvre, ni à la nature de ces classifieurs comportementaux.

De manière plus générale, aucune limitation n'est attachée au nombre de classifieurs comportementaux pouvant être envisagé lors de la mise en œuvre de l'étape E70.

Dans le mode de mise en oeuvre illustré par la figure 3, le procédé de détermination comporte une série d'étapes mises en œuvre avant l'étape E70 et permettant d'aboutir à l'apprentissage d'un classifieur comportemental, dit « classifieur de transition » et appartenant à ladite pluralité de classifieurs comportementaux, à partir d'attributs, dits « attributs de transition », des paquets transmis dans le réseau de communication. Le fait de considérer l'apprentissage d'un tel classifieur de transition n'est bien entendu qu'optionnel pour le fonctionnement de l'invention.

Avant de détailler la manière dont un tel classifieur de transition peut être appris par le dispositif de détermination 11, la notion d'attribut de transition est tout d'abord présentée.

Ainsi, dans le présent mode de réalisation, un attribut de transition d'un paquet correspond à l'association d'une séquence de taille déterminée (supérieure ou égale à 1) de données consécutives dudit paquet avec au moins une donnée dudit paquet consécutive à ladite séquence. De manière équivalente, un attribut de transition peut être vu comme un motif de données, ce motif de données étant composé de ladite séquence et de ladite au moins une donnée consécutive à cette séquence.

Afin d'illustrer le concept d'attribut de transition, et à titre nullement limitatif, considérons le paquet P formé de la suite d'octets suivante :

$$P = \{B1, B2, B3, B4, B5, B6\},$$

où Bk, k allant de 1 à 6, représente un octet. Dès lors, si on considère une taille de séquence d'octets égale à 3, et un unique octet consécutif à chaque séquence de 3 octets, ledit paquet P peut être associé à trois attributs de transition différents, à savoir {(B1, B2, B3) → B4}, {(B2, B3, B4) → B5} et {(B3, B4, B5) → B6}, étant entendu que le symbole « → » représente la transition entre une séquence d'octets et l'unique octet consécutif à ladite séquence respectivement agencés côté gauche et côté droit dudit symbole.

Bien entendu, d'autres attributs de transition peuvent être associés au paquet P en fonction de la taille de séquence considérée, et du nombre de données consécutives à chaque séquence envisagé. Ainsi, si ladite taille de séquence est égale à 4 et qu'un unique octet consécutif à chaque séquence est envisagé, les attributs de transition dudit paquet P sont : {(B1, B2, B3, B4) → B5} et {(B2, B3, B4, B5) → B6}. Si par contre la taille de séquence est égale à 3 et que deux octets consécutifs à chaque séquence sont envisagés, les attributs de transition dudit paquet P sont : {(B1, B2, B3) → (B4, B5)} et {(B2, B3, B4) → (B5, B6)}.

Il ressort de ces exemples qu'aucune limitation n'est attachée à la taille pouvant être envisagée pour une séquence d'octets (qui peut donc être formée d'une ou plusieurs données consécutives), ni même au nombre pouvant être envisagé pour les octets consécutifs à une séquence. D'ailleurs, rien n'exclut d'envisager, au moins théoriquement, une taille de séquence qui est supérieure à la taille initiale du paquet de données dont est issue la séquence. Dans ce cas, il est possible, préalablement à l'extraction d'attributs de transition, de faire du « remplissage » forcé des paquets (encore dit « padding » en anglais), comme cela est connu de l'homme du métier.

Pour la suite de la description, on considère désormais de manière nullement limitative qu'un attribut de transition correspond à l'association entre :

- une séquence d'octets consécutifs dudit paquet, la taille de ladite séquence étant inférieure à la taille du paquet dont est extrait la séquence, et
- un unique octet consécutif à ladite séquence.

Les attributs de transition ainsi définis peuvent être respectivement associés à des quantités d'au moins un type donné et caractérisant la présence des attributs de transition dans un paquet de données.

Selon un exemple de réalisation, des quantités dudit au moins un type donné correspondent à des fréquences d'apparition d'attributs de transition dans un ensemble de paquets de données. Autrement dit, les quantités ici considérées correspondent au nombre de fois où des attributs de transition apparaissent dans un ensemble de paquets de données.

Selon un autre exemple de réalisation, des quantités dudit au moins un type donné correspondent à des gains d'information (« information gain » dans la littérature anglo-saxonne) respectivement associés à des attributs de transition dans un ensemble de paquets de données. Il convient de noter que, dans le contexte technique de l'exploration et de l'analyse de données, la notion de gain d'information est fondamentalement liée à celle de l'entropie associée à un ensemble de données. Ces aspects sont bien connus de l'homme du métier, de sorte qu'ils ne sont pas décrits plus avant ici.

Pour la suite de la description, et à des fins de simplification de cette dernière uniquement, la caractérisation des attributs de transition, via lesdites quantités, se limite à la seule prise en compte de leurs fréquences d'apparition respectives dans des ensembles de paquets. L'invention n'en reste pas moins applicable lorsque lesdits gains d'information et/ou des quantités d'encore au moins un autre type aptes à caractériser la présence d'attributs de transition dans un paquet de données sont pris en compte, isolément ou bien en complément desdites fréquences d'apparition. En particulier, l'homme du métier sait adapter la description qui suit en fonction de l'alternative choisie.

Ainsi, dans le présent mode de mise en oeuvre, et tel qu'illustré par la figure 3, le procédé de détermination comporte une étape E10 de détermination, pour chaque paquet d'un deuxième ensemble E_2 comportant des paquets de comportements respectifs normaux, d'attributs de transition, dits « attributs initiaux » ATT_INI_i (i étant un indice entier). Ladite étape E10 est mise en oeuvre par un premier module de détermination MOD_DET_1 équipant le dispositif de détermination 11.

Les caractéristiques techniques décrites ci-avant concernant l'obtention de l'ensemble E_1 s'appliquent ici de manière similaire en ce qui concerne le deuxième ensemble E_2.

On note par ailleurs que les paquets formant l'ensemble E_2 sont normaux. Afin d'obtenir des paquets possédant un tel comportement, il convient d'intercepter une partie du trafic réseau au cours d'une phase d'exploitation nominale du réseau de communication. Par « nominale », on fait référence ici au fait qu'aucune attaque informatique n'est en cours. Cela étant, on comprend que les attaques informatiques ont en pratique un caractère imprévisible, ce qui peut donc compliquer la tâche consistant à intercepter des paquets normaux. En conséquence, il est possible d'envisager une étape d'analyse de paquets interceptés, par exemple mise en œuvre manuellement par un expert réseau, afin de trier ces derniers et ainsi s'assurer que les paquets retenus pour former l'ensemble E_2 sont bien de comportements respectifs normaux.

Comme précisé auparavant, un attribut de transition consiste, dans la mise en œuvre considérée ici, en l'association d'une séquence de taille déterminée d'octets consécutifs d'un paquet (la taille de la séquence est inférieure à la taille du paquet) avec un unique octet consécutif à ladite séquence.

Selon un exemple de mise en oeuvre, les attributs initiaux ATT_INI_i sont déterminés par extraction de séquences d'octets, au moyen d'une fenêtre glissante appliquée aux paquets de l'ensemble E_2. La taille de cette fenêtre glissante est donnée, et définit la taille d'une séquence d'octets consécutifs d'un attribut de transition. Autrement dit, dans cet exemple de mise en oeuvre, les attributs initiaux ATT_INI_i sont tous formés de séquences d'octets consécutifs de taille identique.

Rien n'exclut cependant d'envisager un autre exemple de mise en œuvre dans lequel une pluralité de fenêtres glissantes de taille respectives distinctes est utilisée. L'invention ne se limite en effet pas à une taille unique de séquences d'octets consécutifs pour les attributs de transition.

Rien n'exclut non plus d'envisager encore d'autres exemples de mise en œuvre dans lesquelles les attributs initiaux ATT_INI_i sont déterminés autrement qu'au moyen d'une ou plusieurs fenêtres glissantes. Par exemple, tout algorithme d'analyse combinatoire apte à déterminer des arrangements dans un ensemble de données peut être envisagé.

Le procédé de détermination selon l'invention reste applicable quelle que soit la taille envisagée pour les attributs de transition (et donc a fortiori quelle que soit la taille envisagée pour une séquence d'octets consécutifs). Il convient toutefois de considérer l'existence d'un compromis entre, d'une part, des risques liés à des aspects de complexité spatiale (espace mémoire requis pour la mise en œuvre du procédé de détermination) et de sur-apprentissage lors de l'apprentissage d'un classifieur comportemental, et d'autre part la qualité de l'information portée par les attributs de transition lors de la mise en œuvre du procédé de détermination. Aussi, les inventeurs ont constaté que le fait de considérer des tailles d'attributs de transition comprises entre 2 et 4 permettait d'obtenir un excellent compromis.

Une fois les attributs initiaux ATT_INI_i déterminés, le procédé de détermination comporte, dans le mode de mise en œuvre de la figure 3, une étape E20 de détermination de fréquences d'apparition F_APP2_i respectives desdits attributs initiaux ATT_INI_i dans ledit deuxième ensemble E_2. Ladite étape E20 est mise en œuvre par un deuxième module de détermination MOD_DET_2 équipant le dispositif de détermination 11.

Ladite étape E20 consiste donc à compter combien de fois chaque attribut initial ATT_INI_i apparait dans le deuxième ensemble E_2. Un tel comptage est par exemple mis en œuvre au moyen d'un algorithme de comptage/nommage de type connu en soi.

On note qu'ici lesdites fréquences d'apparition F_APP2_i correspondent aux quantités initiales mentionnées auparavant.

Par la suite, dans le présent mode de réalisation, le procédé de détermination comporte une étape E30 de sélection, parmi lesdits attributs initiaux ATT_INI_i, d'attributs de transition satisfaisant un critère de sélection CR_SELEC défini en fonction desdites fréquences d'apparition F_APP2_i. Ladite étape E30 est mise en œuvre par un module de sélection MOD_SELEC équipant le dispositif de détermination 11.

Le fait de mettre en œuvre une telle sélection permet non seulement de limiter la charge de calcul du dispositif de détermination 11, mais offre également la possibilité de choisir des attributs initiaux particulièrement représentatifs d'un comportement normal, ce qui s'avère être avantageux pour limiter le risque de sur-apprentissage d'un classifieur comportemental basé sur les attributs initiaux ainsi sélectionnés, comme cela est décrit en détail ci-après.

Selon un exemple de mise en oeuvre, le critère de sélection CR_SELEC est satisfait pour un attribut initial ATT_INI_i si la fréquence d'apparition F_APP2_i associée audit attribut initial ATT_INI_i est supérieure à un seuil.

Ledit seuil correspond par exemple à un seuil donné de manière explicite.

En variante, ledit seuil correspond à un seuil donné de manière implicite. Par exemple, le critère de sélection CR_SELEC consiste à sélectionner les attributs initiaux ATT_INI_i dont les fréquences d'apparition F_APP2_i respectives représentent, dans une proportion donnée, par exemple 80%, les fréquences d'apparition les plus élevées parmi toutes les fréquences d'apparition respectivement associées à tous les attributs initiaux déterminés lors de l'étape E10 (autrement dit, on cumule des fréquences d'apparition les plus élevées jusqu'à atteindre une proportion de représentativité donnée). Ainsi, dans cet exemple, le seuil associé au critère de sélection CR_SELEC n'est pas fourni de manière explicite, a contrario de l'exemple précédent, mais de manière implicite puisqu'il correspond à la fréquence d'apparition la moins élevée parmi les fréquences d'apparition associées aux attributs initiaux sélectionnés.

Le choix consistant à sélectionner des attributs initiaux ATT_INI_i dont les fréquences d'apparition F_APP2_i respectives sont supérieures à un seuil ne constitue qu'une variante d'implémentation de l'invention. D'autres variantes restent envisageables, comme par exemple celle consistant à sélectionner des attributs initiaux ATT_INI_i dont les fréquences d'apparition F_APP2_i respectives sont comprises dans un intervalle donné.

On note par ailleurs que la sélection effectuée ici est fondée sur une caractérisation des attributs initiaux ATT_INI_i qui s'appuie uniquement sur leurs fréquences d'apparition F_APP2_i respectives dans le deuxième ensemble E_2. Cela étant, et comme mentionné auparavant, il pourrait être envisagé un exemple dans lequel le critère de sélection CR_SELEC est défini en fonction de quantités d'un ou plusieurs autres types, comme par exemple des gains d'information respectivement associés auxdits attributs initiaux ATT_INI_i. Ou bien, selon encore un autre exemple, le critère de sélection CR_SELEC pourrait être défini en fonction d'une pondération entre les fréquences d'apparition et des quantités d'un ou plusieurs autres types.

Pour la suite de la description, les attributs initiaux sélectionnés à l'issue de l'étape E30 de sélection sont notés ATT_SELEC_j (j étant un indice entier).

Le procédé de détermination comporte également une étape E40 d'apprentissage supervisé dudit classifieur de transition, à partir de fréquences d'apparition F_APP3_j respectivement associées aux attributs initiaux ATT_SELEC_j sélectionnés lors de l'étape E30 et présents dans des paquets d'un troisième ensemble E_3 comportant au moins un paquet bénin et au moins un paquet malveillant. Ladite étape E40 est mise en œuvre par un troisième module d'apprentissage MOD_LEARN_3 équipant le dispositif de détermination 11.

Ledit troisième ensemble E_3 constitue un ensemble d'entraînement dudit classifieur de transition. De manière similaire à ce qui a été mentionné auparavant concernant l'ensemble E_BIS, le fait que ledit troisième ensemble E_3 comprenne au moins paquet bénin et au moins un paquet malveillant permet d'améliorer la robustesse et la fiabilité de prédiction dudit classifieur de transition lorsque ce dernier est appris de manière supervisée.

Le ou les paquets normaux compris dans ledit troisième ensemble E_3 sont par exemple issus, en tout ou partie, d'un ensemble de paquets utilisé pour l'apprentissage d'un classifieur comportemental basé sur des règles de détection. Rien n'exclut cependant de considérer un troisième ensemble E_3 strictement distinct d'un tel ensemble de paquets.

En outre, l'obtention du ou des paquets bénins dudit troisième ensemble E_3 peut être mise en œuvre de manière similaire à celle décrite ci-avant pour l'ensemble E_BIS.

Dans le présent mode de mise en oeuvre, le vecteur de caractéristiques considéré pour l'apprentissage du classifieur de transition comporte autant de composantes que d'attributs initiaux ATT_SELEC_j sélectionnés lors de l'étape E30. Plus particulièrement, chaque composante du vecteur de caractéristiques est un couple formé d'un attribut initial ATT_SELEC_j sélectionné lors de l'étape E30 ainsi que de la fréquence d'apparition dudit attribut initial ATT_SELEC_j dans un paquet fourni en entrée de la fonction G représentative du modèle à apprendre.

Autrement dit, une fois la fonction G apprise, l'attribution d'une étiquette comportementale à un paquet non étiqueté comporte tout d'abord une extraction des fréquences d'apparition F_APP3_j respectivement associées aux attributs initiaux ATT_SELEC_j sélectionnés lors de l'étape E30 et apparaissant dans ledit paquet non étiqueté. Les fréquences d'apparition F_APP3_j ainsi extraites forment des coefficients de pondération du vecteur de caractéristiques et sont utilisées par la fonction G pour attribuer une étiquette comportementale au paquet non étiqueté.

La mise en œuvre de l'étape E40, pour apprendre le classifieur de transition, s'appuie bien entendu également sur ce processus d'extraction de fréquences d'apparition. Plus particulièrement, chaque paquet étiqueté du troisième ensemble E_3 est associé à des coefficients de pondération du vecteur de caractéristiques. Dès lors, le classifieur de transition est appris de manière supervisée grâce auxdits coefficients de pondération et aux étiquettes respectivement associées aux paquets du troisième ensemble E_3.

De manière similaire à ce qui a été mentionné auparavant, tout algorithme d'apprentissage supervisé peut être envisagé pour apprendre le classifieur de transition (naïf bayésien, machine à vecteurs de support, réseau de neurones, k plus proches voisins, etc.). Préférentiellement, ledit algorithme est un algorithme d'arbres décisionnels, les inventeurs ayant en effet constaté que ce type d'algorithme fournissait les meilleurs résultats en terme de prédiction dans le cadre de la présente invention.

Bien qu'il soit considéré, dans le mode de mise en œuvre de la figure 3, que l'apprentissage faisant l'objet de l'étape E40 est un apprentissage supervisé, il importe de noter qu'il ne s'agit pas là d'une limitation de l'invention. En effet, l'invention reste également applicable, suivant d'autres modes de mise en oeuvre, dans le cas où l'étape E40 concerne un apprentissage non supervisé du classifieur de transition (auquel cas la configuration du module d'apprentissage MOD_LEARN_3 équipant le dispositif de détermination 11 est bien adaptée en conséquence). On note par ailleurs que, pour cette alternative de mise en œuvre consistant à envisager un apprentissage non supervisé, il est possible de considérer un troisième ensemble E_3 d'entrainement comprenant uniquement des paquets normaux, et que l'apprentissage non supervisé peut être réalisé, par exemple, au moyen d'un algorithme de « K-moyennes » (« K-means » dans la littérature anglo-saxonne). Toutes ces dispositions peuvent également s'appliquer en ce qui concerne le classifieur appris au moyen de l'ensemble E_BIS décrit auparavant.

Pour la suite de la description, on considère de manière nullement limitative que la classification des paquets du premier ensemble E_1, lors de la mise en œuvre de l'étape E70, est effectuée au moyen d'une pluralité de classifieurs comportementaux comprenant :

- ledit classifieur de transition, noté « CLASS_1 » ci-après, et obtenue suite à la mise en oeuvre des étapes E10 à E40,
- un deuxième classifieur comportemental CLASS_2 s'appuyant sur des règles de détection définissant une signature d'attaque donnée, comme par exemple une attaque DoS, et obtenu suite à la mise en oeuvre d'une étape E50 comme illustré sur la figure 3,

- un troisième classifieur comportemental CLASS_3 appris de manière supervisée à partir d'une règle de détection consistant comparer avec un seuil donné un nombre de paquets altérés parmi des paquets transmis ans le réseau de communication pendant une durée donnée (comme par exemple une durée égale à une seconde), et obtenu suite à la mise en oeuvre d'une étape E60 comme illustré sur la figure 3.

De cette manière, à l'issue de ladite étape E70, on obtient un ensemble de comportements respectivement prédits pour les paquets dudit premier ensemble E_1, par chacun des classifieurs CLASS_1, CLASS_2, et CLASS_3.

Dès lors, le procédé de détermination comporte une étape E80 d'apprentissage supervisé d'un classifieur comportemental dit « classifieur de génération » CLASS_GEN à partir :

- dudit ensemble de comportements prédits pour le premier ensemble E_1 à l'issue de l'étape E70,
- des paramètres de classification respectivement associés aux classifieurs CLASS_1, CLASS_2, CLASS_3 et déterminés pour ledit premier ensemble E_1.

Ladite étape E80 est mise en œuvre par le premier module d'apprentissage MOD_LEARN_1 équipant le dispositif de détermination 11.

Lesdits paramètres de classification dépendent de la nature du classifieur considéré. Ainsi, dans le cas du classifieur CLASS_1, lesdits paramètres de classification correspondent à des fréquences d'apparition F_APP1_j respectivement associées aux attributs initiaux ATT_SELEC_j sélectionnés et présents dans les paquets dudit premier ensemble E_1. Dans le cas du classifieur CLASS_2, lesdits paramètres de classification correspondent aux attributs comportementaux du ou des règles de détection à partir desquelles est construite la signature associée audit classifieur CLASS_2 et/ou de ladite signature elle-même. En ce qui concerne le classifieur CLASS_3, lesdits paramètres de classification sont les attributs comportementaux correspond au nombre de paquets altérés et à la durée de transmission considérée dans le réseau de communication, ainsi que le seuil de comparaison.

Préférentiellement, l'algorithme d'apprentissage utilisé pour apprendre ledit classifieur de génération CLASS_GEN est un algorithme de k plus proches voisins. Les inventeurs ont en effet constaté que ce type d'algorithme fournissait d'excellents résultats en termes de prédiction et était particulièrement bien adapté à la diversité des paramètres d'apprentissage pris en compte pour apprendre ledit classifieur CLASS_GEN.

Il n'en reste pas moins que le choix d'un algorithme de k plus proches voisins ne constitue qu'une variante d'implémentation de l'invention. D'une manière générale, aucune limitation n'est attachée à l'algorithme d'apprentissage supervisé utilisé pour apprendre ledit classifieur de génération CLASS_GEN (naïf bayésien, machine à vecteurs de support, réseau de neurones, arbres décisionnels, etc.).

Dans le présent mode de mise en oeuvre, et tel qu'illustré par la figure 3, le procédé de détermination comporte également une étape E90 d'apprentissage non supervisé d'un classifieur comportemental dit « classifieur de discrimination » CLASS_DIS à partir d'au moins un paquet non étiqueté ainsi que du comportement prédit par le classifieur de génération CLASS_GEN pour ledit au moins un paquet non étiqueté. Ladite étape E90 est mise en œuvre par le deuxième module d'apprentissage MOD_LEARN_2 équipant le dispositif de détermination 11.

De manière connue en soi, ledit apprentissage non supervisé consiste à déterminer des regroupements (encore dits « clusters » dans la littérature anglo-saxonne) de paquets. En l'espèce, il s'agit ici de deux regroupements R1 et R2 caractérisant les comportements respectivement bénin et malveillant pouvant être attribués à un paquet. Ainsi, si un paquet non étiqueté est classé dans le regroupement R1 (respectivement dans le regroupement R2) par le classifieur de discrimination CLASS_DIS, il se voit attribuer une étiquette ETI_DIS faisant référence à un comportement normal (respectivement à un comportement malveillant).

Aucune limitation n'est attachée à l'algorithme d'apprentissage non supervisé utilisé pour apprendre ledit classifieur de discrimination CLASS_DIS. Par exemple, il peut s'agir d'un algorithme de K-moyenne, d'un algorithme s'appuyant sur un réseau de neurones profond, d'un algorithme de classification hiérarchique, d'un algorithme de décomposition en valeurs singulières, etc.

Aucune limitation n'est non plus attachée au nombre de paquets non étiquetés pouvant être envisagés dans le cadre de l'apprentissage du classifieur de discrimination CLASS_DIS. Le fait de considérer une pluralité de paquets non étiquetés constitue d'ailleurs une mise en œuvre préférée dans la mesure où cela permet d'améliorer, de manière connue en soi, la capacité de prédiction du classifieur de discrimination CLASS_DIS.

En outre, le procédé de détermination a été décrit jusqu'à présent en considérant qu'un attribut de transition correspond à l'association d'une seule séquence de données consécutives d'un paquet avec au moins une donnée dudit paquet consécutive à ladite séquence. Toutefois, l'invention est également applicable, qui plus est de manière particulièrement avantageuse, lorsqu'il est considéré qu'un attribut de transition peut correspondre soit à une seule telle association, soit à une pluralité de telles associations.

Par exemple, le procédé de détermination peut également être mis en œuvre suivant un mode alternatif dans lequel un attribut de transition ATT_SELEC_j sélectionné au cours de l'étape E30 de sélection correspond :

- soit à une seule association d'une séquence de données consécutives d'un paquet du deuxième ensemble E_2 avec au moins une donnée consécutive à ladite séquence,
- soit à un groupe formé des séquences de données consécutives pouvant être obtenues à partir d'une pluralité déterminée d'associations.

La notion de groupe tient compte ici du fait que si plusieurs groupes sont considérés dans ledit mode alternatif, lesdits groupes sont distincts entre eux. En outre, il est également considéré que la quantité initiale associée à un groupe est égale à la somme des quantités initiales respectivement associées aux attributs initiaux dudit groupe.

Par ailleurs, dans un exemple plus particulier de mise en œuvre dudit mode alternatif, on peut également avoir que :

- l'étape E30 de sélection comporte un tri des attributs initiaux par ordre décroissant suivant leurs quantités initiales respectives,
- lesdits groupes sont formés en considérant les attributs initiaux ainsi triés, et que le critère de sélection comporte des conditions consistant en ce que :
- les attributs initiaux dont les quantités initiales respectives sont les plus grandes parmi toutes les quantités initiales déterminées, et dont la somme desdites quantités respectives est inférieure à un premier seuil donné, correspondent chacun à un attribut de transition sélectionné au cours de l'étape de sélection,
- la somme des quantités initiales respectivement associées aux attributs initiaux d'un groupe est supérieure à un seuil associé audit groupe. Préférentiellement, le nombre d'attributs initiaux considéré pour former un groupe correspond au nombre minimal d'attributs initiaux nécessaire pour que ladite somme atteigne au moins ledit seuil associé audit groupe,
- les attributs initiaux dont les quantités initiales respectives sont les plus petites parmi toutes les quantités initiales déterminées, et dont la somme desdites quantités respectives est inférieure à un deuxième seuil donné, ne sont pas pris en compte lors de l'étape de sélection E30.

On détaille maintenant un exemple particulier de mise en œuvre de ce mode alternatif. Dans cet exemple, on considère à nouveau, à titre nullement limitatif, qu'une quantité initiale correspond à une fréquence d'apparition. On considère en outre que l'exécution des étapes E10 et E20 a permis de déterminer 20 attributs initiaux ATT_INI_1, ..., ATT_INI_20 ainsi que leurs fréquences d'apparition respectives F_APP1_1, ..., F_APP1_20 dans le deuxième ensemble E_2, de sorte que :

- les fréquences F_APP1_1 à F_APP1_4 sont toutes égales à 9%,
- les fréquences F_APP1_5 à F_APP1_8 sont toutes égales à 7%,
- les fréquences F_APP1_9 à F_APP1_12 sont toutes égales à 5%,
- les fréquences F_APP1_13 à F_APP1_16 sont toutes égales à 3%,
- les fréquences F_APP1_17 à F_APP1_20 sont toutes égales à 1%.

Dès lors, dans cet exemple, les fréquences d'apparition les plus représentatives (i.e. les plus grandes), jusqu'à avoir au moins 50% de représentativité cumulée (il s'agit dudit premier seuil dans cet exemple), vont être considérées indépendamment les unes des autres, de sorte que chaque attribut initial associé à une telle fréquence correspond à un attribut de transition sélectionné au cours de l'étape E30. On note que les attributs initiaux à partir desquels le seuil de 50% est atteint correspondent aux attributs ATT_INI_i, pour i allant de 1 à 6 (36% de représentativité est atteint grâce aux attributs ATT_INI_i, pour i allant de 1 à 4, 14% de représentativité additionnelle étant apportée par les attributs ATT_INI_5 et ATT_INI_6).

Les attributs initiaux dont les fréquences d'apparition respectives sont les moins représentatives (i.e. les plus petites), et dont la somme est inférieure à 8% (il s'agit dudit deuxième seuil dans cet exemple), ne sont pas pris en compte pour la sélection faisant l'objet de l'étape E30. Cela concerne donc ici les attributs initiaux ATT_INI_16 à ATT_INI_20.

Les autres attributs initiaux (i.e. ATT_INI_i, pour i allant de 7 à 16) sont quant à eux placés dans des groupes auxquels des seuils sont respectivement associés. Chaque groupe est composé de plusieurs attributs initiaux de telle sorte que la somme de leurs fréquences d'apparition atteigne au moins le seuil associé audit groupe. Il importe de noter que les seuils des groupes ne sont pas nécessairement identiques entre eux.

Ainsi, dans le présent exemple, on considère :

- un premier groupe dont le seuil est fixé à 10%. Dès lors, ledit premier groupe contient les attributs initiaux ATT_INI_7 et ATT_INI_8 (une représentativité cumulée de 14% est atteinte pour ledit premier groupe), et l'attribut de transition associé audit premier groupe correspond à toutes les séquences de données possibles comprenant les attributs ATT_INI_7 et/ou ATT_INI_8 ;
- un deuxième groupe dont le seuil est fixé à 12%. Dès lors, ledit deuxième groupe contient les attributs initiaux ATT_INI_9, ATT_INI_10 et ATT_INI_11 (une représentativité cumulée de 15% est atteinte pour ledit deuxième groupe), et l'attribut de transition associé audit deuxième groupe correspond à toutes les séquences de données possibles comprenant les attributs ATT_INI_9 et/ou ATT_INI_10 et/ou ATT_INI_11 ;

- un troisième groupe dont le seuil est fixé à 14%. Dès lors, ledit troisième groupe contient les attributs initiaux ATT_INI_12, ATT_INI_13, ATT_INI_14 et ATT_INI_15 (une représentativité cumulée de 14% est atteinte pour ledit troisième groupe), et l'attribut de transition associé audit troisième groupe correspond à toutes les séquences de données possibles comprenant les attributs ATT_INI_12 et/ou ATT_INI_13 et/ouATT_INI_14 et/ou ATT_INI_15.

En définitive, dans cet exemple de mise en œuvre dudit mode alternatif, une représentativité de 93% est atteinte avec seulement 9 attributs de transition, à savoir:

- les 6 attributs de transitions ATT_INI_i, pour i allant de 1 à 6, et
- les 3 attributs de transition respectivement associés aux premier, deuxième et troisième groupe.

On note alors que sans l'usage de groupes, il aurait fallu tenir compte de 15 attributs distincts (i.e. ATT_INI_i, pour i allant de 1 à 15) pour atteindre une cette représentativité de 93%. On comprend donc qu'il s'agit là de dispositions avantageuses pour faciliter la mise en œuvre des étapes faisant suite à l'étape E30 de sélection.

On note également qu'il s'agit là uniquement d'un exemple donné à titre illustratif, et qu'en pratique la réduction du nombre d'attributs de transition sélectionnés est bien plus significative. Qui plus est, les inventeurs ont constaté que la mise en œuvre de ce mode alternatif permet d'améliorer la robustesse et la précision de l'apprentissage réalisé au cours de l'étape E40.

En définitive, le procédé de détermination selon l'invention offre la possibilité de détecter une attaque dans le réseau de communication sur la base de comportements respectivement prédits par le classifieur de génération CLASS_GEN et le classifieur de discrimination CLASS_DIS.

En pratique, un paquet non étiqueté transmis dans le réseau de communication peut être classifié par les classifieurs CLASS_1, CLASS_2, CLASS_3. Le résultat de ces classifications, accompagné dudit paquet non étiqueté, peut dès lors être fourni en entrée du classifieur de génération CLASS_GEN qui procède alors à sa propre classification dudit paquet non étiqueté. Le résultat de classification obtenu par le classifieur de génération CLASS_GEN peut dès lors être fourni au classifieur de discrimination CLASS_DIS qui peut à son tour classifier ledit paquet non étiqueté. Enfin, les résultats de classification respectivement obtenus par les classifieurs de génération CLASS_GEN et de discrimination CLASS_IDS peuvent faire l'objet de divers traitements, comme par exemple une comparaison ou bien une analyse externe réalisée par un expert, de sorte à éventuellement déclencher une mise à jour de tout ou partie des attributs (attributs comportementaux, attributs de transition) et/ou de tout partie des signatures utilisés par les classifieurs CLASS_1, CLASS_2, CLASS_3.

En outre, lesdits classifieurs de génération CLASS_GEN et de discrimination CLASS_DIS peuvent par exemple fonctionner de manière collaborative, à la manière d'un réseau antagoniste génératif GAN (acronyme de l'expression anglo-saxonne « Generative Adversarial Network »). Dans cet exemple, le classifieur de discrimination CLASS_DIS est configuré pour fournir au classifieur de génération CLASS_GEN un retour d'information lorsqu'il existe des différences entre les comportements respectivement prédits par ledit classifieur de discrimination CLASS_DIS et ledit classifieur de génération CLASS_GEN. Un tel retour d'information peut typiquement servir à ajuster des paramètres de classification du classifieur de génération CLASS_GEN.

Tel que mentionné ci-avant, ledit système de détection 10 comporte également un dispositif de détection d'attaques 12 configuré pour réaliser des traitements permettant de détecter des attaques dans le réseau de communication à l'aide des classifieurs déterminés et/ou utilisés par le dispositif de détermination 11, en mettant en œuvre un procédé de détection selon l'invention.

Pour la suite de la description, et à des fins de simplification de cette dernière uniquement, on considère à nouveau que la caractérisation des attributs de transition se limite à la seule prise en compte de leurs fréquences d'apparition respectives dans des ensembles de paquets. Bien entendu, là encore, rien n'exclut d'envisager des quantités d'un autre type, comme par exemple des gains d'information associés aux paquets de données.

La figure 4 représente schématiquement un exemple d'architecture matérielle du dispositif de détection 12 selon l'invention appartenant au système informatique 10 de la figure 1.

Tel qu'illustré par la figure 4, le dispositif de détection 12 dispose de l'architecture matérielle d'un ordinateur. Ainsi, le dispositif de détection 12 comporte, notamment, un processeur 1_2, une mémoire vive 2_2, une mémoire morte 3_2 et une mémoire non volatile 4_2. Il comporte en outre un module de communication 5_2.

La mémoire morte 3_2 du dispositif de détection 12 constitue un support d'enregistrement conforme à l'invention, lisible par le processeur 1_2 et sur lequel est enregistré un programme d'ordinateur PROG_2 conforme à l'invention, comportant des instructions pour l'exécution d'étapes du procédé de détection selon l'invention. Le programme PROG_2 définit des modules fonctionnels du dispositif de détection 12, qui s'appuient ou commandent les éléments matériels 1_2 à 5_2 du dispositif de détection 12 cités précédemment, et qui comprennent notamment :

- un module d'obtention MOD_OBT configuré pour obtenir la pluralité de classifieurs comportementaux CLASS_1, CLASS_2, CLASS_3, ainsi que le classifieur de génération CLASS_GEN et le classifieur de discrimination CLASS_DIS,
- un module de détection MOD_DETEC configuré pour détecter des attaques dans le réseau de communication au moyen des classifieurs CLASS_1, CLASS_2, CLASS_3, CLASS_GEN, CLASS_DIS ainsi obtenus.

Le module de communication 5_2 permet notamment au dispositif de détection 12 d'échanger des données, via le réseau de communication, avec le dispositif de détermination 11, et plus particulièrement de recevoir le classifieur de génération CLASS_GEN, le classifieur de discrimination CLASS_DIS ainsi que la pluralité de classifieurs comportementaux CLASS_1, CLASS_2, CLASS_3. A cet effet, le module de communication 5_2 comporte une interface de communication, filaire ou non filaire, apte à mettre en œuvre tout protocole supporté par le réseau de communication. En outre, ledit module de communication 5_2 intègre le module d'obtention MOD_OBT.

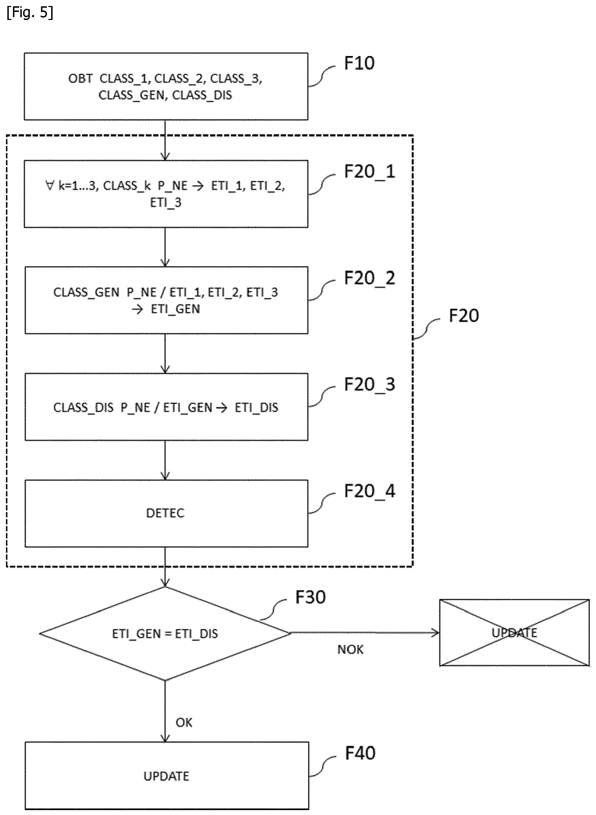

La figure 5 représente, sous forme d'ordinogramme, un mode particulier de mise en œuvre du procédé de détection selon l'invention par le dispositif de détection 12 de la figure 4.

Tel qu'illustré par la figure 5, ledit procédé de détection comporte une étape F10 d'obtention des classifieurs comportementaux CLASS_1, CLASS_2, CLASS_3, CLASS_GEN et CLASS_DIS. Ladite étape F10 est mise en œuvre par le module d'obtention MOD_OBT équipant le dispositif de détection 12.

Cette étape F10 d'obtention consiste, dans le présent mode de mise en œuvre, en une réception desdits classifieurs CLASS_1, CLASS_2, CLASS_3, CLASS_GEN et CLASS_DIS après que ces derniers aient été transmis par le dispositif de détermination 11, par exemple suite à une requête émise par le dispositif de détection 12.

Ledit procédé de détection comporte également une étape F20 de détection d'attaques dans ledit réseau de communication au moyen des classifieurs CLASS_1, CLASS_2, CLASS_3, CLASS_GEN et CLASS_DIS obtenus suite à la mise en œuvre de ladite étape F10 d'obtention. Ladite étape F20 est mise en œuvre par le module de détection MOD_DETEC équipant le dispositif de détection 12.

Dans le présent mode de mise en oeuvre, on considère qu'une décision quant à la présence ou non d'une attaque est émise par le classifieur de discrimination CLASS_DIS à partir d'au moins un comportement prédit par ledit classifieur de discrimination CLASS_DIS pour au moins un paquet non étiqueté. Autrement dit, il est considéré qu'un comportement prédit par le classifieur de discrimination CLASS_DIS pour un paquet non étiqueté prévaut sur celui prédit par un autre classifieur, dont notamment, par exemple, le classifieur de génération CLASS_GEN.

Il convient toutefois de noter que la mise en œuvre du procédé de détection ne se limite pas à de telles dispositions. En effet, rien n'exclut d'envisager une détection d'attaques basée sur un ou plusieurs comportements prédits par les classifieurs de ladite pluralité de classifieurs (CLASS_1, CLASS_2, CLASS_3), par exemple si au moins deux comportements prédits pour un même paquet par deux classifieurs de ladite pluralité diffèrent entre eux.

Comme mentionné ci-avant, la détection d'attaques effectuée via la mise en œuvre de l'étape F20 s'appuie sur des comportements prédits pour au un moins un paquet non étiqueté par respectivement le classifieur de génération CLASS_GEN et le classifieur de discrimination CLASS_DIS.

Pour simplifier la description de la mise en œuvre de l'étape F20, considérons qu'un seul paquet non étiqueté P_NE est réceptionné par le dispositif de détection 12.

Dès lors, ladite étape F20 de détection d'attaques comporte dans un premier temps une sous-étape F20_1 de classification dudit paquet non étiqueté P_NE par chacun des classifieurs CLASS_1, CLASS_2, CLASS_3, en exploitant notamment les attributs de transition et/ou comportementaux relatifs à ce paquet P_NE pris en compte respectivement par chacun de ces classifieurs.

Les classifications respectivement effectuées par les classifieurs CLASS_1, CLASS_2, CLASS_3 peuvent être mise en œuvre séquentiellement ou bien en parallèle.

A l'issue de ladite sous-étape F20_1, on dispose d'un ensemble de comportements respectivement prédits par les classifieurs CLASS_1, CLASS_2 et CLASS_3 pour ledit paquet non étiqueté P_NE. Ces comportements sont représentés par quatre étiquettes comportementales ETI_1, ETI_2, ETI_3 respectivement fournies par les classifieurs CLASS_1, CLASS_2, CLASS_3.

Puis, ladite étape F20 comporte une sous-étape F20_2 de classification dudit paquet non étiqueté P_NE par le classifieur de génération CLASS_GEN, à partir dudit ensemble de comportements prédits à l'issue de ladite sous-étape F20_1 pour ledit paquet non étiqueté P_NE (i.e. en fonction des étiquettes ETI_1, ETI_2, ETI_3) et des attributs de transition et/ou comportementaux considérés pour prédire ledit ensemble de comportements. Le comportement prédit par le classifieur de génération CLASS_GEN pour ledit paquet non étiqueté P_NE est représenté par une étiquette ETI_GEN.

Par la suite, ladite étape F20 comporte une sous-étape F20_3 de classification dudit paquet non étiqueté P_NE par le classifieur de discrimination CLASS_DIS à partir du comportement prédit par le classifieur de génération CLASS_GEN pour ledit paquet non étiqueté P_NE (i.e. à partir de l'étiquette ETI_GEN). Le comportement prédit par le classifieur de discrimination CLASS_DIS pour ledit paquet non étiqueté P_NE est représenté par une étiquette ETI_DIS.

Dans ledit mode de mise en œuvre de la figure 5, l'étape F20 comporte également une sous-étape F20_4 d'émission d'une décision quant à la présence ou non d'une attaque par le classifieur de discrimination à partir de l'étiquette ETI_DIS. Autrement dit, si l'étiquette ETI_DIS est représentative d'un comportement malveillant (respectivement normal), une décision quant à la présence d'une attaque (respectivement quant à l'absence d'une attaque) est émise.

Aucune limitation n'est attachée à la forme pouvant être prise par la décision émise. Par exemple, il peut s'agir d'un message d'information transmis à une entité de confiance (SIEM, SOC) qui peut éventuellement procéder à des analyses complémentaires quant à la nature du comportement prédit par le classifieur de discrimination CLASS_DIS ou déclencher une opération de mitigation de l'attaque.

Dans le mode de mise en œuvre de la figure 5, le procédé de détection comporte également une étape F30 de comparaison entre les comportements prédits pour ledit paquet non étiqueté P_NE par respectivement le classifieur de génération CLASS_GEN et le classifieur de discrimination CLASS_DIS.

Une telle étape F30 de comparaison vise à déterminer s'il existe une différence entre les comportements respectivement associés auxdites étiquettes ETI_GEN et ETI_DIS. Dès lors, si ces comportements diffèrent entre eux, le procédé de détection comporte également, tel que cela est illustré par la figure 5, une étape F40 de mise à jour d'un ou plusieurs paramètres de classification utilisés lors de l'apprentissage des classifieurs CLASS_1, CLASS_2, CLASS_3.

Par exemple, la mise à jour en question peut porter sur :

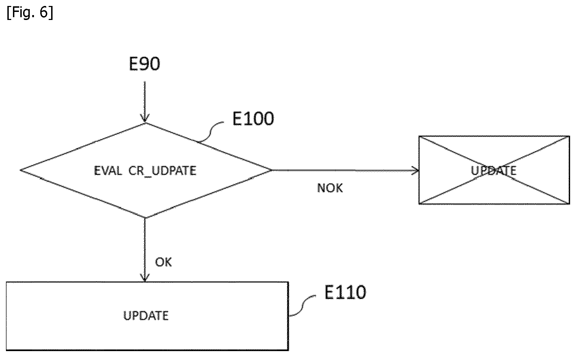

- au moins un desdits attributs de transition sélectionnés ATT_SELEC_j utilisé par le classifieur CLASS_1, comme décrit plus en détails ultérieurement en référence à la figure 6, et/ou
- au moins un attribut comportemental utilisé par le classifieur CLASS_2 et/ou le classifieur CLASS_3, et/ou
- la signature d'attaque utilisée par le classifieur CLASS_2.

On note qu'une telle mise à jour peut être réalisée, selon un exemple particulier de mise en oeuvre, de manière automatique (i.e. sans intervention d'un expert en sécurité informatique ou d'une entité de confiance (SIEM, SOC, etc.)).

Alternativement, s'il existe une différence entre les comportements respectivement associés auxdites étiquettes ETI_GEN et ETI_DIS, on peut envisager une analyse des comportements respectivement déterminés par les classifieurs CLASS_GEN et CLASS_DIS par un expert en sécurité informatique ou bien une entité de confiance (SIEM, SOC, etc) à laquelle seraient transmis lesdits comportements. Une mise à jour peut alors être effectuée manuellement par ledit expert ou ladite entité de confiance si cela est jugé pertinent.

Le fait de faire intervenir un expert en sécurité informatique ou une entité de confiance s'applique préférentiellement lorsque les comportements respectivement prédits par les classifieurs de génération CLASS_GEN et de discrimination CLASS_DIS diffèrent entre eux. Rien n'exclut cependant qu'une telle intervention s'applique également lorsque ces comportements sont identiques (par exemple si un expert décide de procéder à une vérification pour s'assurer que les classifieurs de génération CLASS_GEN et de discrimination CLASS_DIS ont un fonctionnement adapté).

On note également que l'expression « mise à jour » ne fait pas uniquement référence au fait de réévaluer un ou plusieurs attributs précédemment considérés et/ou redéfinir une ou plusieurs signatures précédemment considérées, mais couvre également les cas d'utilisation de nouveaux attributs et/ou d'utilisation de nouvelles signatures d'attaques. La manière dont un ou plusieurs attributs de transition peuvent être mis à jour est décrite plus en détails ultérieurement en référence à la figure 6.

Enfin, on note aussi qu'il est possible d'envisager un mode particulier dans lequel, suite à une mise en œuvre de l'étape F40 de mise à jour, le ré-apprentissage d'au moins un classifieur parmi ladite pluralité de classifieurs CLASS_1, CLASS_2, CLASS_3, le classifieur de génération CLASS_GEN et le classifieur de discrimination CLASS_DIS est déclenché.

Le mode particulier de la figure 5 a été décrit en considérant que les classifieurs obtenus par le dispositif de détection 12, au cours de l'étape F10, sont les classifieurs CLASS_1, CLASS_2, CLASS_3, CLASS_GEN et CLASS_DIS. Cela étant, et comme déjà mentionné auparavant, il est possible d'envisager d'autres modes dans lesquels les classifieurs CLASS_GEN et CLASS_DIS sont obtenus ainsi que un ou plusieurs classifieurs quelconques parmi les classifieurs CLASS_1, CLASS_2 et CLASS_3.

Il convient en outre de noter que les étapes F30, et, le cas échéant, F40 sont des étapes optionnelles du procédé de détection selon l'invention.

Bien entendu, l'invention ne se limite pas à la détection d'attaques dans le réseau de communication sur la base d'un seul paquet de données. Ainsi, l'invention reste applicable lorsqu'une pluralité de paquets est considérée. Le fait qu'une attaque soit détectée à partir d'un ou plusieurs paquets classés malveillants peut dépendre notamment de la nature de l'attaque.

Ainsi, si le classifieur de discrimination CLASS_DIS analyse, lors de la classification d'un paquet, une altération d'au moins un attribut comportemental dudit paquet (exemple : la taille dudit paquet), il peut alors, par exemple, attribuer une étiquette malveillante à ce paquet et émettre une décision quant à la présence d'une attaque de type « fuzzing ».

Alternativement, si le classifieur de discrimination CLASS_DIS analyse, lors de la classification de plusieurs paquets, une altération d'au moins un attribut comportemental desdits paquets (exemple : nombre de paquets supprimés et transmis pendant une fenêtre temporelle donnée), il peut alors, par exemple, attribuer une étiquette malveillante à ces paquets et émettre une décision quant à la présence d'une attaque de type « DoS » ou bien « DDoS ».

La présente invention a été décrite jusqu'à présent en considérant que les dispositifs de détermination 11 et de détection 12 formaient deux entités distinctes. Rien n'exclut cependant de considérer que ces deux dispositifs forment une seule et même entité. Dans ce cas, on comprend que l'étape F10 d'obtention s'identifie avec la mise en œuvre du procédé de détermination lui-même.

Par ailleurs, le procédé de détermination a été décrit jusqu'à présent en considérant, pour le mode de mise en oeuvre de la figure 3, que les attributs de transition ATT_SELEC_j étaient destinés à rester fixes après avoir été sélectionnés (étape E30). Toutefois, l'invention couvre également d'autres modes plus particuliers de mise en oeuvre dans lequel les attributs de transition sélectionnés ATT_SELEC_j peuvent être mis à jour.

La figure 6 représente, sous forme d'ordinogramme, un mode particulier de mise en œuvre du procédé de détermination selon l'invention, dans lequel les attributs de transition sélectionnés ATT_SELEC_j sont mis à jour. On note qu'une telle mise à jour peut également être implémentée dans le procédé de détection selon l'invention, comme mentionné précédemment.

Dans le mode de mise en oeuvre illustré par la figure 6, le procédé de détermination comporte également :

- une étape E100 d'évaluation d'un critère de mise à jour CR_UPDATE, et
- si ledit critère de mise à jour CR_UPDATE est satisfait, une étape E110 de mise à jour de tout ou partie des attributs de transition sélectionnés ATT_SELEC_j.

Lesdites étapes E100 et E110 sont mises en œuvre par des modules respectifs dédiés (non représentés sur les figures) équipant le dispositif de détermination 11.

Ainsi, le procédé propose, sous condition, de mettre à jour au moins les attributs de transition ATT_SELEC_j sélectionnés lors de l'étape de sélection E30. Procéder de la sorte offre la possibilité de renouveler tout ou partie des attributs de transition précédemment sélectionnés, et donc en particulier d'utiliser des attributs qui soient davantage pertinents pour construire un ou plusieurs classifieurs comportementaux efficients ou bien encore ré-entrainer un classifieur comportemental déjà entrainé une première fois lors de la mise en œuvre du procédé de détermination (ex. : le classifieur de transition CLASS_1 et/ou le classifieur de génération CLASS_GEN).

Cette mise à jour des attributs de transition ATT_SELEC_j permet par exemple de tenir compte d'une divergence entre les comportements prédits par le classifieur de transition CLASS_1 et au moins un autre classifieur comportemental CLASS_2, CLASS_3 pour au moins un paquet non étiqueté.

Selon un autre exemple, ladite mise à jour des attributs de transition ATT_SELEC_j permet de tenir compte d'une divergence entre les comportements respectivement prédits par le classifieur de génération CLASS_GEN et le classifieur de discrimination CLASS_DIS.

En d'autres termes, le procédé de détermination propose, via une telle mise à jour, de tenir compte de manière dynamique d'informations de classification provenant de classifieurs autres que le classifieur de transition CLASS_1. De cette manière, il est possible d'accroître la robustesse et la fiabilité de prédiction de comportement du classifieur de transition CLASS_1, et donc a fortiori aussi indirectement celles du classifieur de génération CLASS_GEN et du classifieur de discrimination CLASS_DIS. Il en résulte une réduction du taux de faux positifs (un faux positif correspondant à un paquet prédit comme malveillant alors qu'il est en réalité normal) généré par ces classifieurs.

On note que la mise à jour des attributs de transition ATT_SELC_j est conditionnée par le fait que le critère de mise à jour CR_UPDATE est satisfait.

Plus particulièrement, le fait que le critère de mise à jour CR_UPDATE est satisfait peut par exemple déclencher une mise à jour des fréquences d'apparition F_APP2_i en fonction de paquets transmis dans le réseau de communication depuis la dernière détermination desdites fréquences d'apparition. Par exemple, la mise à jour peut résulter d'une évolution des fréquences d'apparition F_APP2_j, une telle évolution pouvant découler d'une réévaluation de ces quantités (en tenant compte des paquets transmis entre temps), ou, si elles sont évaluées de façon continue, à la prise en compte de leurs valeurs courantes. Il est en effet possible que les valeurs courantes des fréquences d'apparition F_APP2_i aient évolué par rapport aux valeurs déterminées lors de la dernière mise en œuvre de l'étape de sélection E30, une telle évolution pouvant dès lors conduire à la sélection de nouveaux attributs de transition.

Alternativement, ou bien en combinaison avec l'exemple précédent dans lequel les fréquences d'apparition F_APP2_i sont mises à jour, le fait que le critère de mise à jour CR_UPDATE est satisfait peut par exemple déclencher une mise à jour du critère de sélection CR_SELEC. Par exemple, un ou plusieurs seuils différents de ceux précédemment considérés pour le critère de sélection CR_SELC peuvent être envisagés.

La vérification du critère de mise à jour CR_UPDATE ne se limite pas à déclencher des mises à jour telles que celles décrites dans les exemples précédents. Ainsi, d'autres quantités et/ou caractéristiques relatives aux paquets transitant dans le réseau de communication peuvent également, éventuellement en combinaison avec un ou plusieurs des exemples précédents, faire l'objet de mises à jour. Par exemple, de manière similaire à ce qui a été décrit ci-avant pour l'étape F40 du procédé de détection, il est possible d'envisager une mise à jour d'un ou plusieurs attributs comportementaux (réévaluation d'attributs comportementaux précédemment considérés, utilisation de nouveaux attributs comportementaux, etc.) et/ou une mise à jour d'une ou plusieurs signatures d'attaques (redéfinition d'une ou plusieurs règles de détection de signatures d'attaques, utilisation de nouvelles signatures d'attaques, etc.).

Par ailleurs, rien n'exclut d'envisager également que la décision visant à indiquer que le critère de mise à jour CR_UPDATE est satisfait soit basée sur une expertise (i.e. la décision de mise à jour des quantités initiales est prise par un expert en sécurité informatique), cette expertise prenant elle-même appui sur un résultat de comparaison de comportements prédits par des classifieurs. Cela vaut notamment lorsque les comportements respectivement prédits par les classifieurs de génération CLASS_GEN et de discrimination CLASS_DIS diffèrent entre eux, mais peut aussi s'appliquer lorsque ces comportements sont identiques (par exemple si un expert décide de procéder à une vérification pour s'assurer que les classifieurs de génération CLASS_GEN et de discrimination CLASS_DIS ont un fonctionnement adapté).

Le procédé de détermination a été décrit jusqu'à présent en considérant une seule mise à jour des attributs de transition sélectionnés ATT_SELEC_j, cela quel que soit le mode de mise en œuvre (et donc la définition du critère de mise à jour CR_UPDATE) envisagé. Toutefois, l'invention ne se limite pas à de telles dispositions. Ainsi, rien n'exclut d'envisager, suivant d'autres modes de mise en œuvre combinables avec les modes de mise en œuvre décrits jusqu'ici, que les étapes de sélection E30, d'apprentissage E40 du classifieur de transition et, si le critère de mise à jour est satisfait, de mise à jour E110 des quantités initiales sont itérées au moins une fois.

De cette manière, il est possible de mettre régulièrement à jour les attributs de transition sélectionnés ATT_SELEC_j au regard du flux de paquets transmis dans le réseau de communication, et ainsi améliorer encore plus la qualité de prédiction des étiquettes pouvant être attribuées auxdits paquets.

Par ailleurs, bien que le mode de mise en œuvre de la figure 6 a été décrit en ne considérant qu'un seul paquet non étiqueté, rien n'exclut bien entendu d'envisager une pluralité de paquets non étiquetés. Dans ce cas, le critère de mise à jour CR_UPDATE est par exemple évalué pour chacun des paquets de ladite pluralité de paquets, et considéré comme satisfait si les comportements prédits par des classifieurs comportementaux pour tout ou partie des paquets de ladite pluralité diffèrent entre eux.

On note en outre, que bien que les processus d'apprentissage des différents classifieurs et de détection par ces classifieurs aient été décrits précédemment de façon séparée, ces deux processus peuvent être mis en œuvre de façon conjointe lors de la détection (on parle alors d'apprentissage « on-line », par opposition à un apprentissage « off-line » réalisé indépendamment du processus de détection). Autrement dit, les paquets considérés pour détecter une attaque peuvent également être exploités pour réaliser conjointement l'apprentissage des différents classifieurs. Un tel apprentissage « on-line » peut être mis en œuvre de façon continue, à chaque détection, ou en variante, il peut être décidé, lorsqu'il est considéré qu'un classifieur est suffisamment appris, de mettre en pause cet apprentissage « on-line » jusqu'à la détection d'un événement déterminé (par exemple vérification du critère de mise à jour CR_UPDATE).

## Revendications

1. Procédé de détermination de classifieurs de paquets de données transmis dans un réseau de communication, un classifieur étant apte à prédire un comportement d'un paquet parmi au moins un comportement normal et un comportement malveillant, et étant dit « classifieur comportemental », ledit procédé comportant des étapes de :

   - classification (E70) de paquets d'un premier ensemble (E_1) de paquets par une pluralité de classifieurs comportementaux (CLASS_1, CLASS_2, CLASS_3), de sorte à obtenir un ensemble de comportements respectivement prédits pour les paquets dudit premier ensemble,
   - apprentissage supervisé (E80) d'un classifieur comportemental dit « classifieur de génération » (CLASS_GEN) à partir dudit ensemble de comportements prédits ainsi que de paramètres de classification respectivement associés aux classifieurs de ladite pluralité de classifieurs comportementaux et déterminés pour ledit premier ensemble,
   - apprentissage non supervisé (E90) d'un classifieur comportemental dit « classifieur de discrimination » (CLASS_DIS) à partir d'au moins un paquet non étiqueté ainsi que d'un comportement prédit par le classifieur de génération pour ledit au moins un paquet non étiqueté.

2. Procédé selon la revendication 1, dans lequel ladite pluralité de classifieurs comporte un classifieur (CLASS_2) configuré pour prédire un comportement d'un paquet parmi au moins un comportement normal et un comportement malveillant à partir d'au moins une règle de détection définissant au moins une signature d'attaque.

**3.** Procédé selon l'une quelconque des revendications 1 à 2, dans lequel ladite pluralité de classifieurs comprend un classifieur comportemental dit « classifieur de transition » (CLASS_1), ledit procédé comportant, pour obtenir ledit classifieur de transition, des étapes de :

- détermination (E10), pour chaque paquet d'un deuxième ensemble (E_2) comportant des paquets de comportements respectifs normaux, d'attributs de transition, dits « attributs initiaux » (ATT_INI_i), un attribut de transition d'un paquet correspondant à au moins une association d'une séquence de données consécutives dudit paquet avec au moins une donnée dudit paquet consécutive à ladite séquence,
- détermination (E20) de quantités, dites « quantités initiales » (F_APP2_i), d'au moins un type donné et respectivement associées auxdits attributs initiaux,
- sélection (E30), parmi lesdits attributs initiaux, d'attributs de transition (ATT_SELEC_j) satisfaisant un critère de sélection (CR_SELEC) défini en fonction desdites quantités initiales,
- apprentissage (E40) dudit classifieur de transition, à partir de quantités (F_APP3_j) dudit au moins un type donné et respectivement associées aux attributs initiaux sélectionnés présents dans des paquets d'un troisième ensemble (E_3).

**4.** Procédé selon la revendication 3, dans lequel des quantités dudit au moins un type donné correspondent à des fréquences d'apparition (F_APP2_i, F_APP3_j) et/ou des gains d'information d'attributs de transition (ATT_INI_i, ATT_SELEC_j) dans un ensemble de paquets de données (E_2, E_3).

**5.** Procédé selon l'une quelconque des revendications 3 à 4, dans lequel un attribut de transition (ATT_SELEC_j) sélectionné au cours de l'étape de sélection (E30) correspond soit à une seule association, soit à un groupe formé des séquences de données consécutives pouvant être obtenues à partir d'une pluralité déterminée d'associations.

**6.** Procédé selon l'une quelconque des revendications 1 à 5, ledit procédé comportant, si un critère de mise à jour (CR_UPDATE) est satisfait (E100), une étape de mise à jour (E110) de :

- au moins un desdits attributs de transition sélectionnés lorsque le procédé est en outre conforme à l'une quelconque des revendications 3 à 5, et/ou
- au moins un attribut, dit « attribut comportemental », représentatif d'un trafic réseau et/ou au moins une signature d'attaque utilisé(e) par au moins un classifieur comportemental appartenant à ladite pluralité de classifieurs comportementaux lorsque le procédé est en outre conforme à la revendication 2.

**7.** Procédé selon la revendication 6, dans lequel :

- ledit critère de mise à jour est satisfait en fonction d'un résultat de comparaison entre des comportements respectivement prédits (ETI_GEN, ETI_DIS) par les classifieurs de génération et de discrimination pour au moins un paquet non étiqueté, ou
- le critère de mise à jour est satisfait si, pour au moins un paquet non étiqueté (P_NE), le comportement prédit par le classifieur de transition (CLASS_1) diffère du comportement prédit par au moins un autre classifieur comportemental de ladite pluralité de classifieurs comportementaux (CLASS_2, CLASS_3).

**8.** Procédé selon l'une quelconque des revendications 6 et 7, dans lequel, suite à une mise en oeuvre de l'étape de mise à jour, le ré-apprentissage d'au moins un classifieur parmi ladite pluralité de classifieurs, le classifieur de génération et le classifieur de discrimination est déclenché.

**9.** Procédé de détection d'attaques dans un réseau de communication, ledit procédé comportant des étapes de :

- obtention (F10) d'un classifieur de génération (CLASS_GEN) et d'un classifieur de discrimination (CLASS_DIS) déterminés selon un procédé de détermination conforme à l'une quelconque des revendications 1 à 8, ainsi que d'une pluralité de classifieurs comportementaux (CLASS_1, CLASS_2, CLASS_3) utilisés pour apprendre de manière supervisée le classifieur de génération,
- détection (F20) d'attaques dans le réseau de communication au moyen du classifieur de génération, du classifieur de discrimination ainsi que de ladite pluralité de classifieurs comportementaux.

**10.** Procédé selon la revendication 9, dans lequel une décision quant à la présence ou non d'une attaque est émise par le classifieur de discrimination à partir d'au moins un comportement prédit par ledit classifieur de discrimination pour au moins un paquet non étiqueté.

**11.** Procédé selon l'une quelconque des revendications 9 à 10, dans lequel ladite étape de détection d'attaques comporte des sous-étapes de :

- classification (F20_1) d'au moins un paquet non étiqueté (P_NE) par les classifieurs de ladite pluralité de classifieurs comportementaux,
- classification (F20_2) dudit au moins un paquet non étiqueté par le classifieur de génération, à partir des comportements (ETI_1, ETI_2, ETI_3) prédits pour ledit au moins un paquet non étiqueté par les classifieurs de ladite pluralité de classifieurs comportementaux,
- classification (F20_3) dudit au moins un paquet non étiqueté par le classifieur de discrimination à partir du comportement prédit pour ledit au moins un paquet non étiqueté par ledit classifieur de génération.

12. Procédé selon l'une quelconque des revendications 9 à 11, ledit procédé comportant en outre une étape de comparaison entre des comportements (ETI_GEN, ETI_DIS) prédits pour au moins un paquet non étiqueté par respectivement le classifieur de génération et le classifieur de discrimination, et, si lesdits comportements prédits diffèrent entre eux, une étape de mise à jour d'au moins un attribut de transition et/ou un attribut, dit « attribut comportemental », représentatif d'un trafic réseau et/ou une signature d'attaque utilisé(e) par au moins un classifieur comportemental appartenant à ladite pluralité de classifieurs comportementaux.

13. Dispositif (11) de détermination de classifieurs de paquets de données transmis dans un réseau de communication, un classifieur étant apte à prédire un comportement d'un paquet parmi au moins un comportement normal et un comportement malveillant, et étant dit « classifieur comportemental », ledit dispositif comportant :

- un module de classification (MOD_CLASS) configuré pour classifier des paquets d'un premier ensemble (E_1) de paquets par une pluralité de classifieurs comportementaux (CLASS_1, CLASS_2, CLASS_3), de sorte à obtenir un ensemble de comportements respectivement prédits pour les paquets dudit premier ensemble,
- un premier module d'apprentissage (MOD_LEARN_1) configuré pour apprendre de manière supervisée un classifieur comportemental dit « classifieur de génération » (CLASS_GEN) à partir dudit ensemble de comportements prédits ainsi que de paramètres de classification respectivement associés aux classifieurs de ladite pluralité de classifieurs comportementaux et déterminés pour ledit premier ensemble,
- un deuxième module d'apprentissage (MOD_LEARN_2) configuré pour apprendre de manière non supervisée un classifieur comportemental dit « classifieur de discrimination » (CLASS_DIS) à partir d'au moins un paquet non étiqueté ainsi que d'un comportement prédit par le classifieur de génération pour ledit au moins un paquet non étiqueté.

14. Dispositif (12) de détection d'attaques dans un réseau de communication, ledit dispositif de détection comportant :

- un module d'obtention (MOD_OBT) configuré pour obtenir un classifieur de génération (CLASS_GEN) et un classifieur de discrimination (CLASS_DIS) déterminés par un dispositif de détermination (11) selon la revendication 13, ainsi qu'une pluralité de classifieurs comportementaux (CLASS_1, CLASS_2, CLASS_3) utilisés par ledit dispositif de détermination pour apprendre de manière supervisée le classifieur de génération,
- un module de détection (MOD_DETEC) configuré pour détecter des attaques dans le réseau de communication au moyen du classifieur de génération, du classifieur de discrimination ainsi que de ladite pluralité de classifieurs comportementaux.

15. Système (10) de détection d'attaques dans un réseau de communication, ledit système comportant un dispositif de détermination (11) selon la revendication 13 ainsi qu'un dispositif de détection (12) selon la revendication 14.

[Fig. 1]

[Fig. 2]

[Fig. 3]

E10 — E_2 → DET ATT_INI_i

E20 — ∀ i, DET F_APP2_i / ATT_INI_i

E30 — SELEC ATT_SELEC_j / CR_SELEC OK

E40 — E_3 → F_APP3_j / ATT_SELEC_j
LEARN CLASS_1

E50 — OBT CLASS_2

E60 — OBT CLASS_3

E70 — ∀ k=1...3, CLASS_k E_1

E80 — LEARN CLASS_GEN

E90 — LEARN CLASS_DIS

[Fig. 4]

12

5_2   2_2   3_2
              PROG_2
      4_2   1_2

[Fig. 5]

```
┌─────────────────────────────────┐
│  OBT  CLASS_1, CLASS_2, CLASS_3, │──╮  F10
│     CLASS_GEN, CLASS_DIS         │  │
└─────────────────────────────────┘
                 │
┌ ─ ─ ─ ─ ─ ─ ─ ─│─ ─ ─ ─ ─ ─ ─ ─ ─ ┐
                 ▼
│  ┌──────────────────────────────┐  │
   │ ∀ k=1...3, CLASS_k P_NE → ETI_1, ETI_2,│──╮  F20_1
│  │            ETI_3             │  │  │
   └──────────────────────────────┘
│                │                   │
                 ▼
│  ┌──────────────────────────────┐  │
   │ CLASS_GEN  P_NE / ETI_1, ETI_2, ETI_3│──╮  F20_2
│  │          → ETI_GEN           │  │  │       ╮
   └──────────────────────────────┘            │  F20
│                │                   │
                 ▼
│  ┌──────────────────────────────┐  │
   │ CLASS_DIS  P_NE / ETI_GEN → ETI_DIS│──╮  F20_3
│  │                              │  │  │
   └──────────────────────────────┘
│                │                   │
                 ▼
│  ┌──────────────────────────────┐  │
   │           DETEC              │──╮  F20_4
│  │                              │  │  │
   └──────────────────────────────┘
└ ─ ─ ─ ─ ─ ─ ─ ─│─ ─ ─ ─ ─ ─ ─ ─ ─ ┘
                 ▼
              ╱     ╲                 F30
            ╱         ╲          NOK    ┌──────────┐
          ╱ ETI_GEN =  ╲ ──────────────▶│  UPDATE  │
          ╲  ETI_DIS  ╱                 └──────────┘
            ╲       ╱
              ╲   ╱
                │ OK
                ▼
   ┌──────────────────────────────┐
   │           UPDATE             │──╮  F40
   └──────────────────────────────┘
```

[Fig. 6]

Europäisches
Patentamt

European
Patent Office

Office européen
des brevets

# RAPPORT DE RECHERCHE EUROPEENNE

Numéro de la demande

**EP 21 21 0411**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/152475 A1 (PARK MIN HO [KR] ET AL) 31 mai 2018 (2018-05-31) * abrégé; figure 2 * * alinéa [0010] – alinéa [0015] * * alinéa [0024] – alinéa [0091] * ----- | 1-15 | INV. H04L9/40 G06F21/55 G06N20/00 G06N3/08 |
| A | KR 102 091 076 B1 (IGLOO SECURITY INC [KR]) 20 mars 2020 (2020-03-20) * le document en entier * ----- | 1-15 | |
| A | WO 2020/094276 A1 (NEC LABORATORIES EUROPE GMBH [DE]; UNIV MURCIA [ES]) 14 mai 2020 (2020-05-14) * abrégé; figure 1 * * alinéa [0007] – alinéa [0008] * * alinéa [0015] – alinéa [0056] * ----- | 1-15 | |
| A | KO ILI ET AL: "Self-supervised network traffic management for DDoS mitigation within the ISP domain", FUTURE GENERATION COMPUTER SYSTEMS, ELSEVIER SCIENCE PUBLISHERS. AMSTERDAM, NL, vol. 112, 9 juin 2020 (2020-06-09), pages 524-533, XP086251594, ISSN: 0167-739X, DOI: 10.1016/J.FUTURE.2020.06.002 [extrait le 2020-06-09] * abrégé; figures 1-3 * * page 526, colonne de gauche, ligne 1 – page 530, colonne de gauche, ligne 5 * ----- | 1-15 | DOMAINES TECHNIQUES RECHERCHES (IPC) H04L G06F G06N |

Le présent rapport a été établi pour toutes les revendications

| Lieu de la recherche | Date d'achèvement de la recherche | Examinateur |
|---|---|---|
| Munich | 24 mars 2022 | Lebas, Yves |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 21 21 0411**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**24-03-2022**

| Document brevet cité au rapport de recherche | Date de publication | Membre(s) de la famille de brevet(s) | Date de publication |
|---|---|---|---|
| US 2018152475 A1 | 31-05-2018 | AUCUN | |
| KR 102091076 B1 | 20-03-2020 | AUCUN | |
| WO 2020094276 A1 | 14-05-2020 | US 2022021695 A1 | 20-01-2022 |
| | | WO 2020094276 A1 | 14-05-2020 |

EPO FORM P0460

Pour tout renseignement concernant cette annexe : voir Journal Officiel de l'Office européen des brevets, No.12/82